# EUROPÄISCHE PATENTSCHRIFT

(11) **EP 3 117 445 B1**
(45) Veröffentlichungstag und Bekanntmachung des Hinweises auf die Patenterteilung: **27.12.2017**
(21) Anmeldenummer: 15723113.5
(22) Anmeldetag: 10.03.2015
(51) Int. Cl.: H01F 27/34

(54) **SPULENANORDNUNG UND VERFAHREN ZUM ANSTEUERN EINER SPULENANORDNUNG**
COIL ARRANGEMENT AND METHOD FOR CONTROLLING A COIL ARRANGEMENT
ENSEMBLE DE BOBINES ET PROCÉDÉ D'EXCITATION D'UN ENSEMBLE DE BOBINES

(30) Priorität: 10.03.2014 AT 1692014
(43) Veröffentlichungstag der Anmeldung: 18.01.2017
(73) Patentinhaber: Egston System Electronics Eggenburg GmbH, 3730 Eggenburg (AT)
(72) Erfinder: PETZUCH, Martin, CZ-74801 Hlucin-Bobrovniky (CZ); PRAND-STRITZKO, Ernst, AT-2091 Langau (AT)
(74) Vertreter: Gibler & Poth Patentanwälte KG
(86) Internationale Anmeldenummer: PCT/AT2015/000036
(87) Internationale Veröffentlichungsnummer: WO 2015/135009

(56) Entgegenhaltungen:
- JP-A- S59 117 207
- JP-B1- 5 306 562
- US-A1- 2013 234 526

## Beschreibung

Die Erfindung betrifft eine Spulenanordnung gemäß dem Oberbegriff des Patentanspruches 1.

Es sind Spulenanordnungen mit mehreren magnetisch gekoppelten Spulen bzw. Spulenkernen bekannt. Derartige Spulenanordnungen werden etwa in den Ausgängen von Wechselrichtern verwendet. Derartige bekannte Spulenanordnungen sind in der Regel derart aufgebaut, dass die Spulenkerne jeweils zwischen zwei parallelen Jochplatten, daher innerhalb des durch die beiden Jochplatten aufgespannten Raumes angeordnet sind. Derartige Spulenanordnungen weisen einen Aufbau auf, welcher theoretisch eine gute Kopplung der einzelnen Spulen bzw. Spulenkerne ermöglich, welcher jedoch in der Praxis nur mit hohem Aufwand herstellbar bzw. abstimmbar ist. So stellen etwa die Jochplatten hohe Anforderungen hinsichtlich der Fertigungsgenauigkeit, da die Planparallelität der einander zugewandten Flächen bei deren Anordnung wichtig ist, ebenso die exakte Länge der Spulenkerne. Weiters ist es bei gesagtem Aufbau nur schwer möglich die Luftspalte der einzelnen Magnetkreise auf ein gewünschtes Maß einzustellen bzw. zu justieren. Weiters weist ein derartiger Aufbau in der Praxis Nachteile hinsichtlich der Wärmeabfuhr auf. Dadurch sind derartige Spulenanordnungen thermisch hinsichtlich der maximalen Verlustleistung begrenzt.

Die US 2013/234526 A1 zeigt Mehrphaseninduktivitäten mit vier bzw. sechs Spulenkernen, welche durch parallel angeordnete Jochteile stirnseitig gekoppelt sind.

Aufgabe der Erfindung ist es daher eine Spulenanordnung der eingangs genannten Art anzugeben, mit welcher die genannten Nachteile vermieden werden können, welche einfach und mit geringem Fertigungsaufwand herstellbar ist, und welche eine gute Wärmeabfuhr und einen einfachen Abgleich ermöglich.

Erfindungsgemäß wird dies durch die Merkmale des Patentanspruches 1 erreicht.

Dadurch kann eine Spulenanordnung mit gekoppelten Spulen bzw. Spulenkernen geschaffen werden, welche einfach herstellbar ist, und welche geringere Anforderungen hinsichtlich der Fertigungsgenauigkeit bzw. dem Fertigungsaufwand stellt. Eine derartige Spulenanordnung ist einfach zu belüften bzw. zu kühlen und ermöglicht daher eine deutlich bessere Ausnützung des magnetischen Systems. Die betreffende Spulenanordnung weist daher eine geringe Masse auf. Durch die Anordnung der Spulenkerne seitlich an den Jochteilen, ist es möglich jede der Spulen bzw. jeden der Spulenkerne separat gegenüber den Jochteilen zu Justieren, ohne dabei gleichzeitig die Abstände der anderen Spulekerne zu den Jochteilen zu verändern. Weiters ist die jeweils exakte Länge der Spulenkerne wenig relevant, wobei die Stirnseiten nicht planparallel sein müssen. Es ist lediglich die Oberflächenqualität der Spulenkernendbereichseitenflächen relevant, welche bei den bevorzugten Ausführungsformen in einer Ebene liegen. Dies stellt deutlich geringere Anforderungen an den Herstellungsprozess, als die Herstellung planparalleler Stirnseiten mit exaktem Abstand zueinander. Der gesamte Aufbau der Spulenanordnung ist daher einfach herstellbar und abgleichbar.

Die Erfindung betrifft weiters eine elektrische Vorrichtung mit einer gegenständlichen Spulenanordnung.

Die Erfindung betrifft weiters ein Verfahren zum Ansteuern einer Spulenanordnung gemäß dem Oberbegriff des Patentanspruches 15.

Bei der Ansteuerung einer entsprechenden Spulenanordnung mittels schaltbarer Halbbrücken hat sich herausgestellt, dass es je nach der Art der Ansteuerung zu einem starken Schwanken der Ausgangsspannung führen kann. Ein solches starkes Störsignal, daher ein Störsignal mit großer Amplitude, hat erhebliche Nachteile auf die gesamte elektrische Vorrichtung, insbesondere auch auf die Umsetzung der Spulenanordnung. Ein starkes Störsignal erfordert große Querschnitte der Spulenkerne bzw. der Jochteile, um zu verhindern, dass diese aufgrund des Gleichstromanteils in Sättigung getrieben werden. Dadurch wird der Gesamtaufbau vergrößert. Zudem stellen die Magnetwerkstoffe einen erheblichen Kostenfaktor dar, sowie aufgrund der zunehmenden Seltenheit gewisser Werkstoffe zunehmend ein Umweltproblem. Weiters ist es erforderlich ein entsprechend groß dimensioniertes Tiefpassfilter an dem Wechselstromausgang anzuordnen. Ein solches Filter benötigt nicht nur viel Platz aufgrund großer Kondensatoren, welche zudem erhebliche elektrotechnische Probleme verursachen können, aufgrund parasitärer Induktivitäten und Leckströme, sondern weist vor allem eine hohe Zeitkonstante auf, wodurch die gesamte elektrische Vorrichtung hinsichtlich des Zeitverhaltens langsam wird, bzw. eine niedrige Slew Rate aufweist, wodurch folglich auch die obere Grenzfrequenz einer derartigen bekannten Vorrichtung gering ist, was wiederum die Einsatzmöglichkeiten einer Solchen deutlich reduziert.

Aufgabe der Erfindung ist es daher ein Verfahren der vorstehend genannten Art anzugeben, mit welchem die genannten Nachteile vermieden werden können, welches die Ausbildung der Spulenkerne mit geringem Querschnitt bzw. geringem Bedarf an Kernmaterial ermöglicht, und welches eine hohe obere Grenzfrequenz ermöglicht.

Erfindungsgemäß wird dies durch die Merkmale des Patentanspruches 15 erreicht.

Dadurch kann ein geringes Störsignal erzielt werden, bzw. ein Störsignal mit geringer Amplitude. Dadurch könne die Querschnitte der Spulenkerne klein gehalten werden, da der resultierende Gleichstromanteil gering ist. Dadurch kann die Masse einer entsprechend betriebenen Vorrichtung gering gehalten werden, ebenso wie die Kosten. Aufgrund des geringeren Bedarfs an Kernwerkstoffen, kann die Umweltbelastung, welche eine derartige Vorrichtung verursacht gering gehalten werden. Durch die geringe Restwelligkeit des Ausgangssignals kann ein Ausgangsfilter klein gehalten werden, wodurch ein kompakter Gesamtaufbau weiter unterstützt wird, ebenso wie eine hohe obere Grenzfrequenz.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine Prinzipdarstellung einer bevorzugten Anordnung mit sechs Spulenkernen, sowie deren Anordnung gegenüber den Jochteilen im Grundriss;
Fig. 2 ein Prinzipschaltbild einer bevorzugten Ausführungsform einer gegenständlichen elektrischen Vorrichtung;
Fig. 3 eine erste Ausführungsform einer gegenständlichen Spulenanordnung mit sechs Spulen in axonometrischer Darstellung;
Fig. 4 eine zweite Ausführungsform einer gegenständlichen Spulenanordnung mit sechs Spulen in axonometrischer Darstellung;
Fig. 5 eine dritte Ausführungsform einer gegenständlichen Spulenanordnung mit sechs Spulen in axonometrischer Darstellung;
Fig. 6 eine vierte Ausführungsform einer gegenständlichen Spulenanordnung mit sechs Spulen in axonometrischer Darstellung;
Fig. 7 eine fünfte Ausführungsform einer gegenständlichen Spulenanordnung mit sechs Spulen in axonometrischer Darstellung;
Fig. 8 eine sechste Ausführungsform einer gegenständlichen Spulenanordnung mit sechs Spulen in axonometrischer Darstellung; und
Fig. 9 eine schematische Darstellung einer gegenständlichen Spulenanordnung im Aufriss mit Spulenwicklungen in Schnittdarstellung.

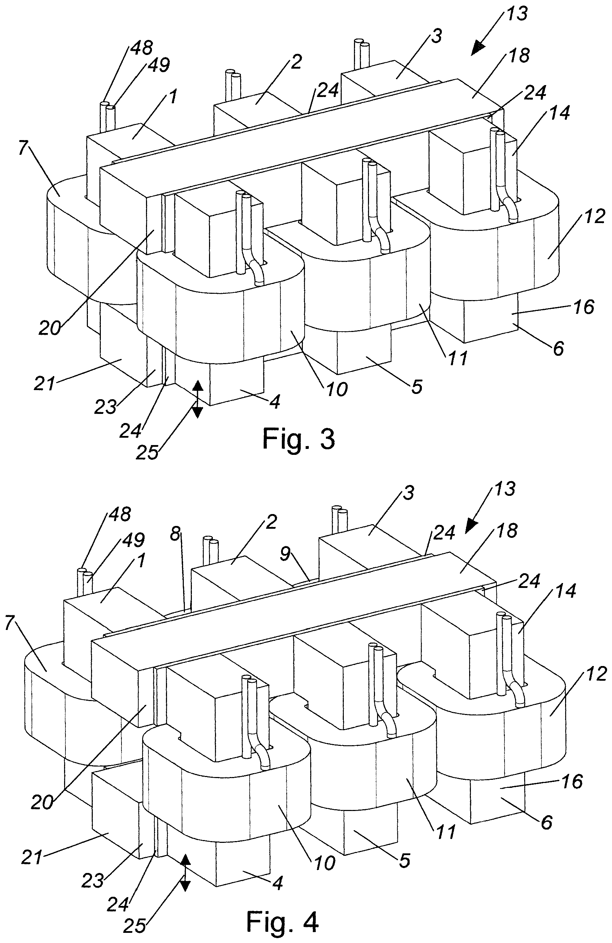

Die Fig. 3 bis 8 zeigen jeweils unterschiedliche Ausführungen einer Spulenanordnung 13 mit einem ersten Spulenkern 1 um welchen eine erste Spulenwicklung 7 angeordnet ist, mit einem zweiten Spulenkern 2 um welchen eine zweite Spulenwicklung 8 angeordnet ist, mit einem vierten Spulenkern 4 um welchen eine vierte Spulenwicklung 10 angeordnet ist, und mit einem fünften Spulenkern 5 um welchen eine fünfte Spulenwicklung 11 angeordnet ist, wobei die Spulenkerne 1, 2, 4, 5 die Spulenwicklungen 7, 8, 10, 11 jeweils mit einem ersten Spulenkernendbereich 14 und einem, vom ersten Spulenkernendbereich 14 unterschiedlichen, zweiten Spulenkernendbereich 16 überragen, wobei die Spulenanordnung 13 weiters ein erstes Jochteil 18 und ein zweites Jochteil 21 aufweist, wobei erste Spulenkernendbereichseitenflächen 15 der ersten Spulenkernendbereiche 14 des ersten Spulenkerns 1 und des zweiten Spulenkerns 2 jeweils gegenüber einer ersten Jochseitenfläche 19 des ersten Jochteils 18 angeordnet sind, wobei zweite Spulenkernendbereichseitenflächen 17 der zweiten Spulenkernendbereiche 16 des ersten Spulenkerns 1 und des zweiten Spulenkerns 2 jeweils gegenüber einer ersten Jochseitenfläche 22 des zweiten Jochteils (21) angeordnet sind, wobei erste Spulenkernendbereichseitenflächen 15 der ersten Spulenkernendbereiche 14 des vierten Spulenkerns 4 und des fünften Spulenkerns 5 jeweils gegenüber einer, von der ersten Jochseitenfläche 19 unterschiedlichen, zweiten Jochseitenfläche 20 des ersten Jochteils 18 angeordnet sind, und wobei zweite Spulenkernendbereichseitenflächen 17 der zweiten Spulenkernendbereiche 16 des vierten Spulenkerns 4 und des fünften Spulenkerns 5 jeweils gegenüber einer, von der ersten Jochseitenfläche 22 unterschiedlichen, zweiten Jochseitenfläche 23 des zweiten Jochteils 21 angeordnet sind.

Dadurch kann eine Spulenanordnung 13 mit gekoppelten Spulenwicklungen 7, 8, 10, 11 bzw. Spulenkernen 1, 2, 4, 5 geschaffen werden, welche einfach herstellbar ist, und welche geringe Anforderungen hinsichtlich der Fertigungsgenauigkeit bzw. dem Fertigungsaufwand stellt. Eine derartige Spulenanordnung 13 ist einfach zu belüften bzw. zu kühlen und ermöglicht daher eine deutlich bessere Ausnützung des magnetischen Systems. Die betreffende Spulenanordnung 13 weist daher eine geringe Masse auf. Durch die Anordnung der Spulenkerne 1, 2, 4, 5 seitlich an den Jochteilen 18, 21, ist es möglich jede der Spulenwicklungen 7, 8, 10, 11 bzw. jeden der Spulenkerne 1, 2, 4, 5 separat gegenüber den Jochteilen 18, 21 zu Justieren, ohne dabei gleichzeitig die Abstände der anderen Spulekerne 1, 2, 4, 5 zu den Jochteilen 18, 21 zu verändern. Weiters ist die jeweils exakte Länge der Spulenkerne 1, 2, 4, 5 wenig relevant, wobei die Stirnseiten nicht planparallel sein müssen. Es ist lediglich die Oberflächenqualität der Spulenkernendbereichseitenflächen 15, 17 relevant, welche bei den bevorzugten Ausführungsformen in einer Ebene liegen. Dies stellt deutlich geringere Anforderungen an den Herstellungsprozess, als die Herstellung planparalleler Stirnseiten mit exaktem Abstand zueinander. Der gesamte Aufbau der Spulenanordnung 13 ist daher einfach herstellbar und abgleichbar.

Bei der gegenständlichen Spulenanordnung 13 handelt es sich um eine Anordnung aus zumindest vier Spulen bzw. Spulenwicklungen 7, 8, 10, 11, welche jeweils einen Spulenkern 1, 2, 4, 5 aufweisen und welche mittels wenigstens zweier Jochteile 18, 21 magnetisch gekoppelt sind. Die gegenständliche Spulenanordnung 13 ist bevorzugt als Ausgangsspulenanordnung eines Wechselrichters vorgesehen, wobei jedoch auch andere Anwendungen derselben vorgesehen sein können.

Gemäß den besonders bevorzugten Ausführungsformen ist vorgesehen, dass die Spulenanordnung 13 weiters einen dritten Spulenkern 3 sowie einen sechsten Spulenkern 6 aufweist, wobei um den dritten Spulenkern 3 eine dritte Spulenwicklung 9 angeordnet ist, wobei um den sechsten Spulenkern 6 eine sechste Spulenwicklung 12 angeordnet ist, wobei der dritte und der sechste Spulenkern 3, 6 die dritte bzw. sechste Spulenwicklung 9, 12 jeweils mit einem ersten Spulenkernendbereich 14 und einem, vom ersten Spulenkernendbereich 14 unterschiedlichen, zweiten Spulenkernendbereich 16 überragen, dass eine erste Spulenkernendbereichseitenfläche 15 des ersten Spulenkernendbereichs 14 des dritten Spulenkerns 3 gegenüber der ersten Jochseitenfläche 19 des ersten Jochteils 18 angeordnet ist, dass eine zweite Spulenkernendbereichseitenfläche 17 des zweiten Spulenkernendbereichs 16 des dritten Spulenkerns 3 gegenüber der ersten Jochseitenfläche 22 des zweiten Jochteils 21 angeordnet ist, dass eine erste Spulenkernendbereichseitenfläche 15 des ersten Spulenkernendbereichs 14 des sechsten Spulenkerns 6 gegenüber der zweiten Jochseitenfläche 20 des ersten Jochteils 18 angeordnet ist, und dass eine zweite Spulenkernendbereichseitenfläche 17 des zweiten Spulenkernendbereichs 16 des sechsten Spulenkerns 6 gegenüber der zweiten Jochseitenfläche 23 des zweiten Jochteils 21 angeordnet ist. Diesbezüglich haben sich Ausführungen einer Spulenanordnung 13 mit sechs Spulenkernen 1, 2, 3, 4, 5, 6 und sechs Spulenwicklungen 7, 8, 9, 10, 11, 12 als besonders relevant und hinsichtlich der Umsetzung vorteilhaft herausgestellt.

Die gegenständliche Erfindung wird anhand der, wie bereits dargelegt besonders bevorzugten Ausführungsformen mit jeweils sechs Spulenkernen 1, 2, 3, 4, 5, 6 und sechs Spulenwicklungen 7, 8, 9, 10, 11, 12 beschrieben. Die gegenständliche Nomenklatur, daher die Bezeichnung der einzelnen Bauteile bzw. Bauelemente ist auf eine einfache und schlüssige Beschreibung der besonders bevorzugten Ausführungsformen mit sechs Spulenkernen 1, 2, 3, 4, 5, 6 bzw. Spulenwicklungen 7, 8, 9, 10, 11, 12 abgestellt. Der Umstand, dass in der Konfiguration mit lediglich vier Spulenkernen 1, 2, 4, 5 bzw. Spulenwicklungen 7, 8, 10, 11 ein zweiter Spulenkern 2 und ein vierter Spulenkern 4 aufscheint, stellt keine zwingende Notwendigkeit für die Anordnung bzw. Existenz eines dritten Spulenkerns 3 dar. Selbiges gilt auch für die Spulenwicklungen 7, 8, 9, 10, 11, 12. Daher sind aus den gewählten Bezeichnungen der einzelnen Bauteile keine zwingenden Hinweise auf eine Einschränkung auf eine Spulenanordnung 13 mit genau sechs Spulenkernen 1, 2, 3, 4, 5, 6 und sechs Spulenwicklungen 7, 8, 9, 10, 11, 12 ablesbar. Hinsichtlich der Ausführung der gegenständlichen Erfindung mit lediglich vier Spulen bzw. Spulenkernen sind jeweils, sofern nicht ohnedies beschrieben, der dritte und sechste Spulenkern 3, 6, sowie die dritte und sechste Spulenwicklung 9, 12 sinngemäß wegzulassen.

Die einzelnen Baugruppen aus Spulenwicklung 7, 8, 9, 10, 11, 12 und Spulenkern 1, 2, 3, 4, 5, 6 sind bevorzugt im Wesentlichen jeweils identisch zueinander ausgebildet, wobei sich dies insbesondere auf die elektrischen Eigenschaften der betreffenden Baugruppen bezieht. In den Fig. 3 bis 8 sind diese Baugruppen entsprechend identisch ausgebildet. In den betreffenden Figuren sind einzelne Teile der betreffenden Baugruppen nicht bei sämtlichen Spulenwicklung 7, 8, 9, 10, 11, 12 und Spulenkern 1, 2, 3, 4, 5, 6 mit Bezugszeichen versehen, da dies der Übersicht der betreffenden Figuren abträglich wäre.

Die betreffende Baugruppe bzw. Anordnung weist einen Spulenkern 1, 2, 3, 4, 5, 6 auf. Dieser ist bevorzugt als Ferritkern ausgebildet, bzw. aus anderen geeigneten Werkstoffen, wie diese als magnetisches Kernmaterial für Transformatoren oder ähnliche elektromagnetische Vorrichtungen hinlänglich bekannt sind, etwa Schichten aus Etektroblech, welches auch als Trafoblech bekannt ist.

Die Spulenkerne 1, 2, 3, 4, 5, 6 weisen bevorzugt einen im Wesentlichen rechteckigen oder quadratischen Querschnitt auf, wobei auch anderen Querschnittsformen vorgesehen sein können, bzw. unterschiedliche Querschnitte an unterschiedlichen Bereichen der Spulenkerne 1, 2, 3, 4, 5, 6. Vorzugsweise sind die Spulenkerne 1, 2, 3, 4, 5, 6 quaderförmig ausgebildet. Bevorzugt sind auch Spulenkerne 1, 2, 3, 4, 5, 6 vorgesehen, welche im Wesentlichen zylindrisch ausgebildet sind, und lediglich ebene Spulenkernendbereichseitenflächen 15, 17 aufweisen.

Auf den Spulenkernen 1, 2, 3, 4, 5, 6 bzw. um diese herum ist jeweils eine Spulenwicklung 7, 8, 9, 10, 11, 12 bzw. Spule angeordnet. Die Spulenwicklung 7, 8, 9, 10, 11, 12 weist dabei jeweils eine vorgebbare Anzahl Wicklungen bzw. Windungen eines elektrischen Leiters auf, welche Wicklungen bevorzugt in mehreren Lagen übereinander angeordnet sind. Besonders bevorzugt ist vorgesehen, dass die Spulenwicklungen 7, 8, 9, 10, 11, 12 jeweils aus einem flachen bzw. bandförmigen und isolierten Leiter gebildet sind.

Wie in den Fig. 3 bis 9 dargestellt, überragen die Spulenkerne 1, 2, 3, 4, 5, 6 die Spulenwicklungen 7, 8, 9, 10, 11, 12 jeweils an einer Seite mit einem ersten Spulenkernendbereich 14 und an der anderen Seite der Spulenwicklung 7, 8, 9, 10, 11, 12 mit einem, vom ersten Spulenkernendbereich 14 unterschiedlichen, zweiten Spulenkernendbereich 16. Die Spulenkernendbereiche 14, 16 sind dabei die Teile bzw. Bereiche der Spulenkerne 1, 2, 3, 4, 5, 6, welche die Spulenwicklung 7, 8, 9, 10, 11, 12 überragen, bzw. welche daher außerhalb der Spulenwicklung 7, 8, 9, 10, 11, 12 angeordnet sind.

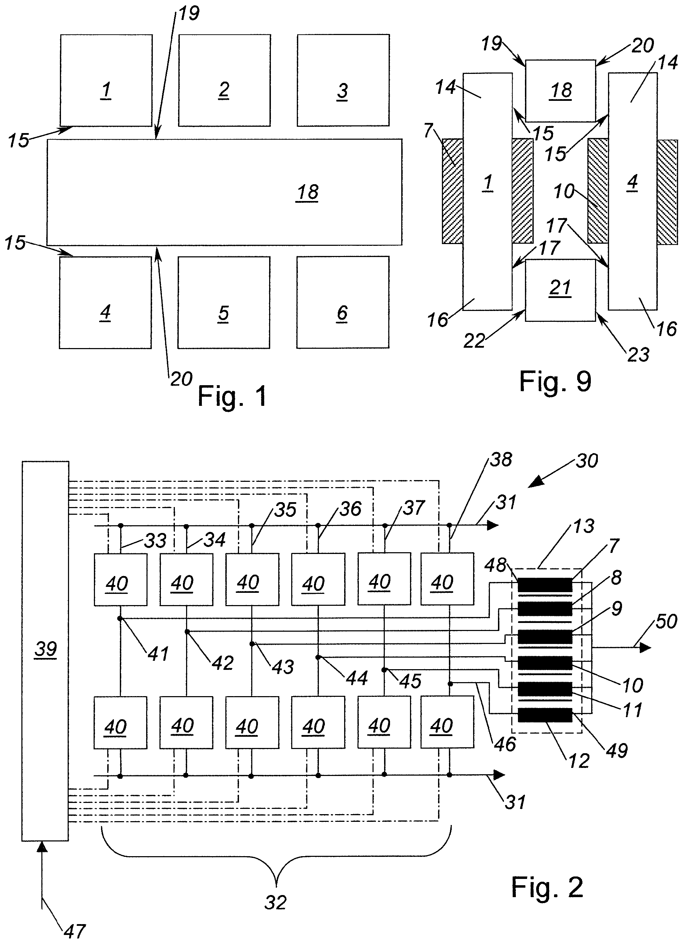

Die Spulenanordnung 13 weist zumindest ein erstes Jochteil 18 und ein zweites Jochteil 21 auf, wobei weitere Jochteile 26, 27 vorgesehen sein können. Die Jochteile 18, 21, 26, 27 dienen der magnetischen Kopplung der Spulenwicklungen 7, 8, 9, 10, 11, 12 bzw. der Spulenkerne 1, 2, 3, 4, 5, 6. Bei gegenständlicher Spulenanordnung 13 ist vorgesehen, dass die Spulenkerne 1, 2, 3, 4, 5, 6 nicht innerhalb eines Raumes angeordnet sind, welcher durch die beiden in Abstand zueinander angeordneten ersten und zweiten Jochteile 18, 21 aufgespannt ist, sondern, dass die Spulenkerne 1, 2, 3, 4, 5, 6 jeweils seitlich an den ersten und zweiten Jochteil 18, 21 ankoppeln. Die Fig. 1 und 9 zeigen Prinzipskizzen der betreffenden Anordnung im Grundriss bzw. im Aufriss.

Der erste und der zweite Jochteil 18, 21 können unterschiedlich ausgebildet sein, wobei bevorzugt vorgesehen ist, dass die beiden Jochteile 18, 21 im Wesentlichen identisch bzw. gleichartig ausgebildet sind. Diese sind umfassen Ferrit oder Elektroblech ausgebildet. Selbiegs gilt in bevorzugter Weise für allfällige weitere Jochteile 26, 27.

Bevorzugt und wie in den Fig. 3 bis 9 dargestellt, ist vorgesehen, dass der erste Jochteil 18 und der zweite Jochteil 21 im Wesentlichen quaderförmig ausgebildet sind, und dass der erste Jochteil 18 und der zweite Jochteil 21 mit im Wesentlichen fluchtenden Jochseitenflächen 19, 20, 22, 23 zueinander angeordnet sind. Bevorzugt sind die einander zugewandten Flächen der beiden Jochteile 18, 21 parallel zueinander angeordnet.

Der erste Jochteil 18 weist eine erste Jochseitenfläche 19 des ersten Jochteils 18 sowie eine zweite Jochseitenfläche 20 des ersten Jochteils 18 auf. Die erste Jochseitenfläche 19 des ersten Jochteils 18 ist dabei bevorzugt im Wesentlichen parallel zu der zweiten Jochseitenfläche 20 des ersten Jochteils 18 angeordnet.

Der zweite Jochteil 21 weist eine erste Jochseitenfläche 22 des zweiten Jochteils 21 sowie eine zweite Jochseitenfläche 23 des zweiten Jochteils 21 auf. Die erste Jochseitenftäche 19 des zweiten Jochteils 21 ist dabei bevorzugt im Wesentlichen parallel zu der zweiten Jochseitenfläche 23 des zweiten Jochteils 21 angeordnet.

Bevorzugt sind die beiden Jochteile 18, 21 derart zueinander angeordnet, dass die ersten bzw. zweiten Jochseitenflächen 19, 20, 22, 23 der beiden Jochteile 18, 21 im Wesentlichen fluchten.

Die Spulenkernendbereiche 14, 16 weisen jeweils eine Fläche auf, welche als erste Spulenkernendbereichseitenflächen 15 der ersten Spulenkernendbereiche 14 sowie als zweite Spulenkernendbereichseitenflächen 17 der zweiten Spulenkernendbereiche 16 bezeichnet wird. Die betreffenden Spulenkernendbereichseitenflächen 15, 17 sind zur magnetischen Kopplung mit den Jochseitenflächen 19, 20, 22, 23 der ersten bzw. zweiten Jochteile 18, 21 vorgesehen, und bevorzugt entsprechend gegengleich zu den Bereichen der Jochseitenflächen 19, 20, 22, 23 an denen diese magnetisch ankoppeln sollen, ausgebildet.

Bei den dargestellten bevorzugten Ausführungsformen sind die Jochseitenflächen 19, 20, 22, 23 jeweils als im Wesentlichen plane bzw. ebene Flächen ausgebildet, entsprechend ist bevorzugt vorgesehen, dass die Spulenkernendbereichseitenflächen 15, 17 ebenfalls als plane bzw. ebene Flächen ausgebildet sind. Bei unterschiedlicher Geometrie können auch diesbezüglich abweichende Flächengeometrien vorgesehen sein. Etwa kann vorgesehen sein, dass die Jochteile 18, 21 kreissegmentartige Ausnehmungen aufweisen, zur Kopplung zylindrischer Spulenkernendbereichseitenflächen 15, 17.

Es ist vorgesehen, dass die ersten Spulenkernendbereichseitenflächen 15 des ersten Spulenkerns 1, des zweiten Spulenkerns 2 und des dritten Spulenkerns 3 jeweils gegenüber der ersten Jochseitenfläche 19 des ersten Jochteils 18 angeordnet sind, und dass die zweite Spulenkernendbereichseitenflächen 17 des ersten Spulenkerns 1, des zweiten Spulenkerns 2 und des dritten Spulenkerns 3 jeweils gegenüber der ersten Jochseitenfläche 22 des zweiten Jochteils 21 angeordnet sind.

Es ist ebenso vorgesehen, dass die ersten Spulenkernendbereichseitenflächen 15 des vierten Spulenkerns 4, des fünften Spulenkerns 5 und des sechsten Spulenkerns 6 jeweils gegenüber der zweiten Jochseitenfläche 20 des ersten Jochteils 18 angeordnet sind, und dass die zweiten Spulenkernendbereichseitenflächen 17 des vierten Spulenkerns 4, des fünften Spulenkerns 5 und des sechsten Spulenkerns 6 jeweils gegenüber der zweiten Jochseitenfläche 23 des zweiten Jochteils 21 angeordnet sind.

Die einzelnen Spulenkerne 1, 2, 3, 4, 5, 6 sind daher seitlich an dem ersten bzw. zweiten Jochteil 18, 21 angeordnet und nicht in dem Raum zwischen den beiden beabstandeten zueinander angeordneten Jochteilen 18, 21.

Bevorzugt ist dabei vorgesehen, dass zwischen den ersten und/oder zweiten Sputenkernendbereichseitenftächen 15, 17 und den ersten und/oder zweiten Jochseitenflächen 19, 20, 22, 23 jeweils ein Luftspalt und/oder eine Isolierstoffplatte 24 angeordnet ist, wie dies auch in den Fig. 1, sowie 3 bis 9 dargestellt ist. Isolierstoffplatten 24 sind dabei üblich um einen sog. Luftspalt in einer magnetischen Anordnung sicherzustellen bzw. umzusetzen.

Bei den dargestellten bevorzugten Ausführungsformen sind jeweils ein Luftspalt bzw. eine Isolierstoffplatte 24 gegenüber jeder der Jochseitenflächen 19, 20, 22, 23 angeordnet. Es kann auch vorgesehen sein, dass nur an einer der Jochseitenflächen 19, 20, 22, 23 je Jochteil 18, 21 ein Luftspalt bzw. eine Isolierstoffplatte 24 angeordnet ist. Dabei ist bevorzugt vorgesehen, dass beispielsweise an dem ersten Jochteil 18 der Luftspalt bzw. die Isolierstoffplatte 24 an der ersten Jochseitenfläche 19 angeordnet ist, und dass an dem zweiten Jochteil 21 der Luftspalt bzw. die Isolierstoffplatte 24 an der zweiten Jochseitenfläche 23 angeordnet ist.

Bevorzugt ist vorgesehen, dass die sechs Spulenkerne 1, 2, 3, 4, 5, 6 in jeweils zwei Reihen zu je drei Spulenkernen 1, 2, 3, 4, 5, 6 um die beiden Jochteile 18, 21 herum angeordnet sind. Dabei ist bevorzugt vorgesehen, dass der erste, zweite und dritte Spulenkern 1, 2, 3 in einer ersten Reihe angeordnet sind, wobei der zweite Spulenkern 2 zwischen dem ersten Spulenkern 1 und dem dritten Spulenkern 3 angeordnet ist, und dass der vierte, fünfte und sechste Spulenkern 4, 5, 6 in einer zweiten Reihe angeordnet sind, wobei der vierte Spulenkern 4 gegenüber dem ersten Spulenkern 1 angeordnet ist, und wobei der fünfte Spulenkern 5 zwischen dem vierten Spulenkern 4 und dem sechsten Spulenkern 6 angeordnet ist. Fig. 1 zeigt eine entsprechende schematische Darstellung im Grundriss, wobei lediglich die Spulenkerne 1, 2, 3, 4, 5, 6 und der erste Jochteil 18 dargestellt sind.

Gemäß nicht dargestellter weiterer Ausführungsformen ist vorgesehen, den beschriebenen Aufbau, bei welchem beidseitig zweier Jochteile 18, 21 jeweils Anordnungen aus Spulenkernen 1, 2, 3, 4, 5, 6 und Spulenwicklungen 7, 8, 9, 10, 11, 12 angeordnet sind, paarweise zu erweitern. Es kann daher vorgesehen sein, dass die erste Reihe vier oder mehr Spulenkerne 1, 2, 3, 4, 5, 6 aufweist, sowie dass die zweite Reihe vier oder mehr Spulenkerne 1, 2, 3, 4, 5, 6 aufweist.

An sich können die einzelnen Spulenkerne 1, 2, 3, 4, 5, 6 in unterschiedlichen Abständen zueinander angeordnet sein, wobei es sich als vorteilhaft in der Praxis erwiesen hat, dass ein Abstand zwischen dem ersten Spulenkern 1 und dem zweiten Spulenkern 2 im Wesentlichen identisch ist zu einem Abstand zwischen dem zweiten Spulenkern 2 und dem dritten Spulenkern 3, sowie im Wesentlichen identisch zu einem Abstand zwischen dem vierten Spulenkern 4 und dem fünften Spulenkern 5, sowie im Wesentlichen identisch zu einem Abstand zwischen dem fünften Spulenkern 5 und dem sechsten Spulenkern 6. Die Abstände der einzelnen Spulenkerne 1, 2, 3, 4, 5, 6 zueinander sind daher bevorzugt gleich.

Weiters ist bevorzugt vorgesehen, dass der erste Spulenkern 1 bezüglich des ersten Jochteiles 18 und/oder des zweiten Jochteiles 21 symmetrisch zum vierten Spulenkern 4 angeordnet ist. Bevorzugt ist ein, wie auch in den Fig. 1, sowie 3 bis 8 dargestellt, im Grundriss im Wesentlichen symmetrischer Aufbau, wobei eine entsprechende, nicht dargestellte Symmetrieachse durch den ersten bzw. zweiten, jeweils als gleichartigen Quader ausgebildeten Jochteil 18, 21 verläuft. Durch den symmetrischen Aufbau kann ein hinsichtlich dessen magnetischer Eigenschaften einfacher Aufbau erzielt werden.

Wie vorstehend angeführt, ermöglicht die symmetrische Anordnung der Spulenkerne 1, 2, 3, 4, 5, 6 bzw. die Anordnung mit jeweils identischen Abständen zueinander die Ausbildung eines einfachen Aufbaus mit einfach beherrschbaren magnetischen Eigenschaften. Es kann unabhängig von diesem Aufbau auch ein anderer Aufbau vorgesehen sein, wobei vorgesehen ist, dass die Spulenkerne 1, 2, 3, 4, 5, 6 derart um die Jochteile 18, 21 angeordnet sind, dass eine magnetische Länge zwischen dem ersten Spulenkern 1 und dem vierten Spulenkern 4 im Wesentlich identisch ist zu einer magnetischen Länge zwischen dem zweiten Spulenkern 2 und dem fünften Spulenkern 5, sowie identisch zu einer magnetischen Länge zwischen dem dritten Spulenkern 3 und dem sechsten Spulenkern 6. Dies ist bei den beschriebenen bevorzugten Ausführungsformen gegeben.

Dabei ist weiters bevorzugt vorgesehen, dass die Spulenkerne 1, 2, 3, 4, 5, 6 derart um die Jochteile 18, 21 angeordnet sind, dass eine magnetische Länge zwischen dem ersten Spulenkern 1 und dem zweiten Spulenkern 2 im Wesentlich identisch ist zu einer magnetischen Länge zwischen dem ersten Spulenkern 1 und dem fünften Spulenkern 5. Dies gilt entsprechend bevorzugt auch für die magnetischen Längen der weiteren benachbarten Spulenkerne 1, 2, 3, 4, 5, 6, und hat als Ziel einen hinsichtlich der magnetischen Eigenschaften symmetrischen Aufbau. Bei im Wesentlichen homogenen Werkstoffeigenschaften wird ein geometrisch symmetrische Aufbau mit einem, hinsichtlich dessen magnetischen Eigenschaften symmetrischen Aufbau ident sein. Bei Jochteilen 18, 21, 26, 27 mit inhomogenen Werkstoffeigenschaften können unterschiedliche magnetische Eigenschaften durch eine Veränderung der Positionierung einzelner Spulenkerne 1, 2, 3, 4, 5, 6 bezüglich der Position der anderen Spulenkerne 1, 2, 3, 4, 5, 6 ausgeglichen werden.

Fig. 3 zeigt eine erste Ausführungsform einer gegenständlichen Spulenanordnung 13. Die Spulenkerne 1, 2, 3, 4, 5, 6 sind dabei jeweils in Form eines Quaders ausgebildet, ebenso die beiden Jochteile 18, 21, welche zueinander parallel angeordnet sind. Weitere Baugruppen, welche die Jochteile 18, 21 bzw. die Spulenkerne 1, 2, 3, 4, 5, 6 an deren dargestellten Position halten, sind in Fig. 3 wie auch den weiteren Fig. 4 bis 9 nicht dargestellt. Derartige mechanische Baugruppen bzw. Mittel sind vorgesehen, und an sich bekannt. Die Längserstreckung 25 der Spulenkerne 1, 2, 3, 4, 5, 6 ist jeweils im Wesentlichen im rechten Winkel zur Längserstreckung der Jochteile 18, 21 angeordnet. Die Spulenwicklungen 7, 8, 9, 10, 11, 12 sind lediglich stilistisch durch deren Umriss dargestellt, sowie durch die ersten und zweiten Anschlüsse 48, 49. Zwischen den Spulenkernen 1, 2, 3, 4, 5, 6 und den Jochteilen 18, 21 sind Isolierstoffplatten 24 angeordnet, wie dies zur Sicherstellung eines sog. Luftspaltes bekannt ist.

Fig. 4 zeigt eine zweite Ausführungsform einer gegenständlichen Spulenanordnung 13, wobei die Spulenkerne 1, 2, 3, 4, 5, 6 als C-Schenkel ausgebildet sind.

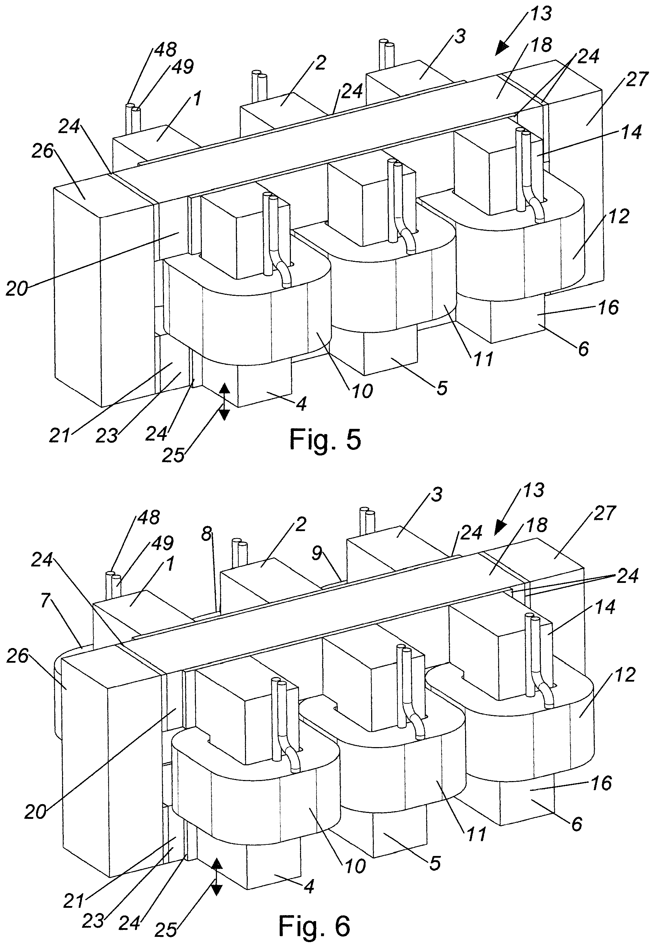

Die Fig. 5 und 6 zeigen eine dritte bzw. vierte Ausführungsform einer gegenständlichen Spulenanordnung 13, wobei es sich um Weiterbildungen der ersten bzw. zweiten Ausführungsform gemäß den Fig. 1 bzw. 2 handelt. Der erste und zweite Jochteil 18, 21 sind durch ein drittes Jochteil 26 und ein viertes Jochteil 27, welche jeweils als I-Schenkel ausgebildet sind, magnetisch verbunden bzw. gekoppelt. Zwischen den ersten und zweiten Jochteilen 18, 21 und den dritten du vierten Jochteilen 26, 27 sind jeweils Isolierstoffplatten 24 angeordnet.

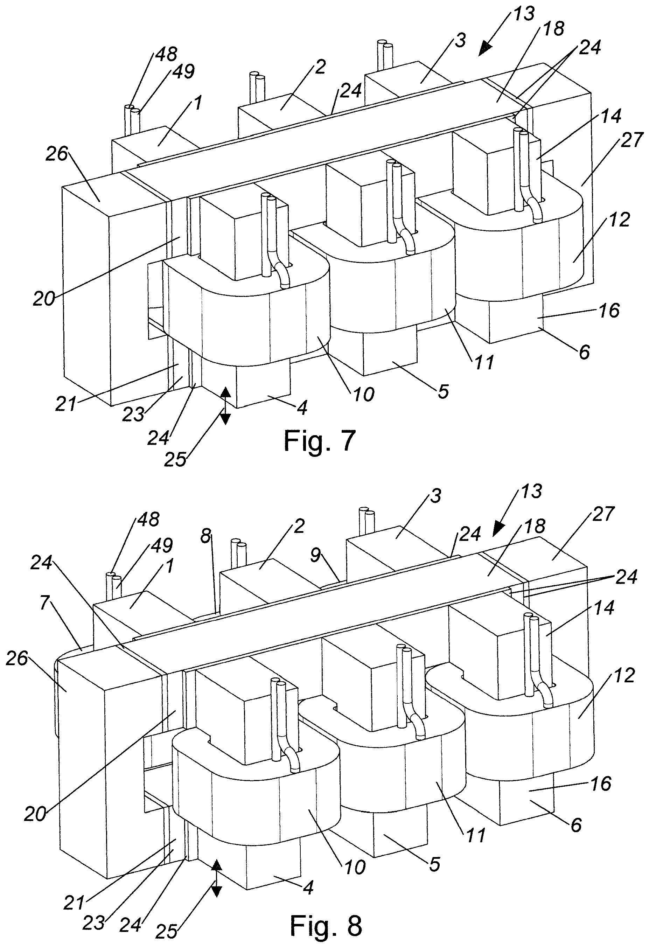

Die Fig. 7 und 8 zeigen eine fünfte bzw. sechste Ausführungsform einer gegenständlichen Spulenanordnung 13, wobei gegenüber den Ausführungsformen gemäß den Fig. 5 bzw. 6 das dritte und vierte Jochteil 26, 27 als C-Schenkel ausgebildet ist.

Bei der vierten und der sechsten bevorzugten Ausführungsform einer gegenständlichen Spulenanordnung 13 gemäß den Fig. 6 und 8 ist zudem vorgesehen, dass die Spulenkerne 1, 2, 3, 4, 5, 6 als C-Schenkel ausgebildet sind.

Durch die unterschiedliche Ausbildung der Spulenkerne 1, 2, 3, 4, 5, 6 sowie gegebenenfalls der Kopplung der Jochteile 18, 21, 26, 27 kann die Spulenanordnung 13 an unterschiedliche Anforderungen angepasst werden.

Bevorzugt ist vorgesehen, dass wenigstens einer der sechs Spulenkerne 1, 2, 3, 4, 5, 6 in Richtung des Luftspalts und/oder der Isolierstoffplatte 24 verschiebbar angeordnet ist. Dadurch kann eine einfache Justage der magnetischen Kopplung erfolgen. Der oder die betreffenden Spulekerne 1, 2, 3, 4, 5, 6 sind dabei in einer entsprechenden Justagevorrichtung gelagert, welche eine Längsverschiebung ermöglicht. Eine derartige Justagevorrichtung kann etwa umfassend einer Linearführung sowie einem Gewindestelltrieb ausgebildet sein, wobei auch andere Umsetzungen möglich sind. Etwa kann eine automatisierte Justagevorrichtung vorgesehen sein, welche von der Ansteuereinheit 39, oder auch einer externen Schnittstelle angetrieben wird, und die entsprechenden Verstellvorgänge mittels eines Stellmotors durchführt.

Zusätzlich bzw. alternativ hiezu ist bevorzugt vorgesehen, dass wenigstens einer der sechs Spulenkerne 1, 2, 3, 4, 5, 6 in Richtung seiner Längserstreckung 25 verschiebbar angeordnet ist. Dabei kann sowohl vorgesehen sein, dass der Spulenkern 1, 2, 3, 4, 5, 6 zusammen mit der auf diesem angeordneten Spulenwicklung 7, 8, 9, 10, 11, 12 verschiebbar angeordnet ist, oder aber auch nur der Spulenkern 1, 2, 3, 4, 5, 6 für sich. Die Umsetzung einer entsprechenden Justagevorrichtung kann analog den vorstehenden Ausführungen erfolgen.

Zusätzlich bzw. alternativ zu wenigstens einer der beiden vorstehend angeführten Justagemöglichkeiten kann weiters vorgesehen sein, dass wenigstens einer der sechs Spulenkerne 1, 2, 3, 4, 5, 6 in Richtung quer zu dessen Längserstreckung 25 in Richtung des benachbarten Spulenkerns 1, 2, 3, 4, 5, 6 verschiebbar angeordnet ist, wodurch eine weitere Möglichkeit der einfachen Justage gegeben ist.

Die vorstehend beschriebenen drei Möglichkeiten eine gegenständliche Spulenanordnung 13 mechanisch abzugleichen sind einzeln oder in Kombination einsetzbar, und ermöglichen einen Abgleich der betreffenden Spulenanordnung 13 in einem weiten Bereich. Die entsprechenden Justagebereiche sind dabei deutlich größer, als etwa bei bekannten Spulenanordnungen, bei welchen die Spulenkerne zwischen planparallelen Jochflächen angeordnet sind, und bei denen Veränderung an einem schwer zugänglichen Raum durchgeführt werden müssen, und zudem die Beeinflussung der anderen Spulen deutlich höher ist.

Die gegenständlichen Justagearten weisen weiters den Vorteil auf, dass die wenigstens eine entsprechende Justagevorrichtung einfach anordenbar ist, da um die Spulenanordnung 13 herum Platz gegeben ist, und es nicht erforderlich ist, zur Justage in den Raum innerhalb der Jochteile 18, 21, 26, 27 zu gelangen, bzw. an diesem schwer zugänglichen Bereich geringfügige Verstellungen an mechanischen Bauteilen vornehmen zu müssen. Die entsprechenden Baugruppen einer Justagevorrichtung können um die Spulenanordnung 13 herum angeordnet werden, was es einfach macht, diese derart zu gestallten, dass diese auch noch bei Einbau der Spulenanordnung 13 in ein Gehäuse einer elektrischen Vorrichtung 30 weiterhin einfach zugänglich sind, und einen nachträglichen Abgleich bzw. eine Neuabstimmung ermöglichen.

Eine besonderes bevorzugte Einsatzumgebung einer gegenständlichen Spulenanordnung 13 sind elektrische Vorrichtungen 30, welche schaltbare Halbbrücken 33, 34, 35, 36, 37, 38 aufweisen, und welche etwa als Schaltregler, Wechselrichter oder auch als Inverter bezeichnet werden.

Fig. 2 zeigt eine Prinzipdarstellung einer elektrischen Vorrichtung 30 mit einem Gleichstromanschluss 31, mit einer Schaltanordnung 32 umfassend eine erste schaltbare Halbbrücke 33, eine zweite schaltbare Halbbrücke 34, eine dritte schaltbare Halbbrücke 35, eine vierte schaltbare Halbbrücke 36, eine fünfte schaltbare Halbbrücke 37 und eine sechste schaltbare Halbbrücke 38, welche Halbbrücken 33, 34, 35, 36, 37, 38 jeweils zwischen zwei Leiter geschaltet sind, welche jeweils mit einem Pol des Gleichstromanschlusses 31 geschaltet sind.

Nicht dargestellt ist ein Masseanschluss. Bevorzugt ist vorgesehen, dass eine elektrische Masse der elektrischen Vorrichtung 30 potentialsymmetrisch zwischen die beiden Leiter des Gleichstromanschlusses 31 gelegt wird, um einen symmetrischen Aufbau zu erzielen, sowie einen im Wesentlichen gleichstromfreien Ausgang.

Jede der Halbbrücken 33, 34, 35, 36, 37, 38 weist zwei Schalter 40 auf, welche auch als variable Widerstände bezeichnet werden können, und welche jeweils bevorzugt als Paarung eines IGBT und einer Freilaufdiode ausgebildet sind, wobei auch anders ausgebildete Halbleiterschaltelemente vorgesehen sein können.

Jede der Halbbrücken 33, 34, 35, 36, 37, 38 weist zwischen den beiden Schaltern 40 einen Ausgang 41, 42, 43, 44, 45, 46 auf, welcher jeweils mit einer der Spulenwicklungen 7, 8, 9, 10, 11, 12 einer gegenständlichen Spulenanordnung 13 verbunden ist. Daher ist bevorzugt der erste Ausgang 41 der erste Halbbrücke 33 mit der ersten Spulenwicklung 7 verbunden, der zweite Ausgang 42 der zweiten Halbbrücke 34 mit der zweiten Spulenwicklung 8, der dritte Ausgang 43 der dritten Halbbrücke 35 mit der dritten Spulenwicklung 9, der vierte Ausgang 44 der vierten Halbbrücke 36 mit der vierten Spulenwicklung 10, der fünfte Ausgang 45 der fünften Halbbrücke 37 mit der fünften Spulenwicklung 11 und der sechste Ausgang 46 der sechsten Halbbrücke 38 mit der sechsten Spulenwicklung 12.

Die Ausgänge 41, 42, 43, 44, 45, 46 der Halbbrücken 33, 34, 35, 36, 37, 38 sind dabei jeweils mit einem ersten Anschluss 48 der Spulenwicklungen 7, 8, 9, 10, 11, 12 verbunden. Die zweiten Anschlüsse 49 sämtlicher Spulenwicklungen 7, 8, 9, 10, 11, 12 sind ebenfalls miteinander verbunden, und sind weiters mit einem Wechselstromanschluss 50 der elektrischen Vorrichtung 30 verbunden, bzw. bilden den entsprechenden Wechselstromanschluss 50.

Es können auch Ausführungen einer gegenständlichen elektrischen Vorrichtung 30 mit einer höheren oder einer geringeren Anzahl an schaltbaren Halbbrücken 33, 34, 35, 36, 37, 38 vorgesehen sein. Dabei ist jeweils vorgesehen, dass die Anzahl der schaltbaren Halbbrücken 33, 34, 35, 36, 37, 38 identisch ist mit der Anzahl der Spulenwicklungen 7, 8, 9, 10, 11, 12 der Spulenanordnung 13. Weiters ist bevorzugt eine geradzahlige Anzahl an schaltbaren Halbbrücken 33, 34, 35, 36, 37, 38 sowie Spulenwicklungen 7, 8, 9, 10, 11, 12 vorgesehen. Die gegenständliche Ausführungen einer solchen Vorrichtung 30 mit sechs schaltbaren Halbbrücken 33, 34, 35, 36, 37, 38 ist besonders bevorzugt, und hat sich hinsichtlich der praktischen Umsetzung als vorteilhaft erwiesen.

Die elektrische Vorrichtung 30 weist weiters eine Ansteuereinheit 39 auf, welche mit den Schaltern 40 der einzelnen Halbbrücken 33, 34, 35, 36, 37, 38 verbunden ist, und welche Ansteuereinheit 39 dazu ausgebildet ist, die Schalter 40 der Halbbrücken 33, 34, 35, 36, 37, 38 mit einem vorgebbaren Phasenwinkel zueinander zu schalten bzw. entsprechend anzusteuern.

Die Ansteuereinheit 39 ist bevorzugt umfassend einen Mikroprozessor oder Mikrocontroller und/oder einer programmierbaren Logikschaltung ausgebildet. Es kann dabei vorgesehen sein, die nachfolgend beschriebene bevorzugte Ansteuerung der einzelnen Spulenwicklungen 7, 8, 9, 10, 11, 12 der gegenständlichen Spulenanordnung 13 sowohl durch entsprechende Programmierung eines Mikroprozessors oder Mikrocontrollers zu erzielen, oder aber auch durch eine vollständige Hardwarelösung.

Bei derartigen elektrischen Vorrichtungen 30, bzw. Wechselrichtern besteht das Problem, dass am Wechselstromausgang 50 ein Wechselstromsignal anliegen soll, welches lediglich eine geringe Restwelligkeit aufweisen soll, welche auch als Rippel bezeichnet wird. Die Schalter 40 der Halbbrücken 33, 34, 35, 36, 37, 38 werden typischerweise mit einer Schaltfrequenz im Kiloherzbereich getaktet geschaltet. Vorzugsweise ist vorgesehen, die Halbbrücken 33, 34, 35, 36, 37, 38 mit einer Schaltfrequenz im Bereich zwischen 10 kHz und 50 kHz, vorzugsweise in einem Bereich um 20 kHz, zu schalten. Das derart aus unterschiedlich phasenversetzten Teilen bestehende Signal wird in der Spulenanordnung 13 geglättet und zu einem Signal zusammengesetzt. Dabei kann jedoch aufgrund des Aufbaus der Spulenanordnung 13, welcher von einem theoretisch idealen, jedoch in der Praxis kaum umsetzbaren, sternförmigen Aufbau abweicht, nicht verhindert werden, dass es aufgrund der unterschiedlichen magnetischen Längen zwischen manchen Spulenkernen 1, 2, 3, 4, 5, 6 zu einem Störsignal kommt, welches die Schaltfrequenz oder Vielfache der Schaltfrequenz aufweist, und das Nutzsignal überlagert. Entsprechend ist es üblich, an den Wechselstromausgang 50 ein - nicht dargestelltes - Tiefpassfilter zu schalten, um dieses Störsignal zu filtern.

Ein starkes Störsignal, daher ein Störsignal mit großer Amplitude, hat erhebliche Nachteile auf die gesamte elektrische Vorrichtung, insbesondere auch auf die Umsetzung der Spulenanordnung 13. Ein starkes Störsignal erfordert große Querschnitte der Spulenkerne bzw. der Jochteile, um zu verhindern, dass diese aufgrund des Gleichstromanteils in Sättigung getrieben werden. Dadurch wird der Gesamtaufbau vergrößert. Zudem stellen die Magnetwerkstoffe einen erheblichen Kostenfaktor dar, sowie aufgrund der zunehmenden Seltenheit gewisser Werkstoffe zunehmend ein Umweltproblem. Weiters ist es erforderlich ein entsprechend groß dimensioniertes Tiefpassfilter an dem Wechselstromausgang 50 anzuordnen. Ein solches Filter benötigt nicht nur viel Platz aufgrund großer Kondensatoren, welche zudem erhebliche elektrotechnische Problemen verursachen können, aufgrund parasitärer Induktivitäten und Leckströme, sondern weist vor allem eine hohe Zeitkonstante auf, wodurch die gesamte elektrische Vorrichtung hinsichtlich des Zeitverhaltens langsam wird, bzw. eine niedrige Slew Rate aufweist, wodurch folglich auch die obere Grenzfrequenz einer derartigen bekannten Vorrichtung gering ist, was wiederum die Einsatzmöglichkeiten einer Solchen deutlich reduziert.

Es hat sich gezeigt, dass die Art der Ansteuerung der einzelnen Spulenwicklungen 7, 8, 9, 10, 11, 12 der Spulenanordnung 13, daher welche der Spulenwicklungen 7, 8, 9, 10, 11, 12 mit welchem Phasenwinkel relativ zu den anderen Spulenwicklungen 7, 8, 9, 10, 11, 12 angesteuert wird, einen sehr starken Einfluss auf die höhe, daher die Amplitude des Störsignals hat. Durch bestimmte Ansteuerung der Schalter 40 der einzelnen Schaltbrücken 33, 34, 35, 36, 37, 38 und folglich den einzelnen Spulenwicklungen 7, 8, 9, 10, 11, 12 kann die Höhe bzw. Amplitude des Störsignals deutlich reduziert werden. Diesbezügliche Test ergaben eine Verminderung des Störsignals um das zehn- bis zwanzigfache.

Bezogen auf den grundsätzlichen Aufbau einer gegenständlichen Spulenanordnung 13, wie dieser schematisch in Fig. 1 dargestellt ist, konnten drei Gruppen von Ansteuermöglichkeiten gefunden werden, welche sich gegenüber der großen Menge an Möglichkeiten der Ansteuerung als besonders Vorteilhaft erwiesen haben.

Durch die nachfolgend beschriebene Art der Ansteuerung der einzelnen Spulenwicklungen 7, 8, 9, 10, 11, 12 kann die Amplitude des Störsignals für den gegenständlichen geometrischen Aufbau minimiert werden. Dadurch können die Querschnitte der Spulenkerne 1, 2, 3, 4, 5, 6 sowie der Jochteile 18, 21, 26, 27 klein gehalten werden. Dadurch kann die Masse der Spulenanordnung 13 gering gehalten werden, ebenso wie der Aufwand an hochwerten Magnetwerkstoffen. Durch die geringe Amplitude des Störsignals kann das Tiefpassfilter am Wechselstromausgang 50 klein ausgeführt werden, wobei ein Filter mit geringer Zeitkonstante verwendet werden kann. Durch die geringe Amplitude des Störsignals kann eine Slew Rate und damit auch eine hohe obere Grenzfrequenz erzielt werden, wodurch sich einer derartig ausgebildeten gegenständlichen elektrischen Vorrichtung 30 gänzlich neue Einsatzmöglichkeiten eröffnen. In Test konnte eine obere Grenzfrequenz von 10 kHz erreicht werden, bei abgegebenen Leistungen im zweistelligen Kilowattbereich.

Es sei darauf hingewiesen, dass die beschriebenen Arten der Ansteuerung der einzelnen Spulenwicklungen auf eine Spulenanordnung 13 bezieht, bei welcher die einzelnen Spulenkerne 1, 2, 3, 4, 5, 6 mit deren jeweils zugeordneten Spulenwicklungen 7, 8, 9, 10, 11, 12 sämtliche im Wesentlichen identische Induktivitäten aufweisen. Vorzugsweise ist dabei vorgesehen, dass die betreffenden Induktivitäten zueinander keine größeren Unterschiede aufweisen, als 5%. Es ist in der Praxis bevorzugt vorgesehen, dass die betreffende Spulenanordnung 13 mittels der bevorzugt vorgesehenen Justagevorrichtungen abgeglichen wird. Die Justage erfolgt daher an der Spulenanordnung 13, wobei bevorzugt vorgesehen ist, dass die elektrischen Parameter, insbesondere eine Induktivität, bzw. Strom und Spannung, jeweils der Anordnung aus Spulenwicklung 7, 8, 9, 10, 11, 12 und Spulenkern 1, 2, 3, 4, 5, 6 gemessen wird, welche justiert wird. Dabei können unterschiedliche Methoden des Abgleichs vorgesehen sein. Bevorzugt wird die betreffende abzugleichende Spulenwicklung 7, 8, 9, 10, 11, 12 in eine Messbrücke geschaltet.

Die nachfolgend beschriebenen Arten der Ansteuerung beschreiben jeweils relative Phasenwinkel der einzelnen Schaltbrücken 33, 34, 35, 36, 37, 38 zueinander, welche wie vorstehend dargelegt mit bestimmten Spulenwicklungen 7, 8, 9, 10, 11, 12 verbunden sind. Der besseren Übersicht wegen ist jeweils eine Tabelle mit den unterschiedlichen relativen Phasenwinkeln angegeben. Dabei ist jeweils der Phasenwinkel der ersten Schaltbrücke 33 mit 0° angegeben. Da sich die Angaben jedoch auf relative Phasenwinkel beziehen, kann der Wert 0° jeder der Schaltbrücken 33, 34, 35, 36, 37, 38 zugewiesen werden.

Gemäß einer ersten Art der Ansteuerung ist vorgesehen, dass die Ansteuereinheit 39 ausgebildet ist, die Schalter 40 der vierten Schaltbrücke 36 mit im Wesentlichen 180° Phasenverschiebung gegenüber den Schaltern 40 der ersten Schaltbrücke 33 anzusteuern, die Schalter 40 der zweiten Schaltbrücke 34 mit im Wesentlichen 180° Phasenverschiebung gegenüber den Schaltern 40 der fünften Schaltbrücke 37 anzusteuern, die Schalter 40 der dritten Schaltbrücke 35 mit im Wesentlichen 180° Phasenverschiebung gegenüber den Schaltern 40 der sechsten Schaltbrücke 38 anzusteuern, die Schalter 40 der zweiten Schaltbrücke 34 oder der fünften Schaltbrücke 37 um 60° gegenüber den Schaltern 40 der ersten Schaltbrücke 33 anzusteuern, und die Schalter 40 der dritten Schaltbrücke 35 oder der sechsten Schaltbrücke 38 um 120° gegenüber den Schaltern der ersten Schaltbrücke 33 anzusteuern.

Die beschriebenen ersten Arten der Ansteuerung sind in Tabelle 1 zusammengefasst. Dabei ist in dieser und den weiteren Tabellen jeweils die Schaltbrücke mit Bezugszeichen in den Spalten eingetragen. Weiters sind die Bezugszeichen der den betreffenden Schaltbrücken 33, 34, 35, 36, 37, 38 zugeordnete Spulenkerne 1, 2, 3, 4, 5, 6 eingetragen, um eine einfache Zuordnung der betreffenden Ansteuerwinkel in Fig. 1 zu ermöglichen.

**Tabelle 1**

| Schaltbrücke | (33) | (36) | (34) | (37) | (35) | (38) |
|---|---|---|---|---|---|---|
| Spulenkern | (1) | (4) | (2) | (5) | (3) | (6) |
| | 0° | 180° | 60° | 240° | 120° | 300° |
| | 0° | 180° | 60° | 240° | 300° | 120° |
| | 0° | 180° | 240° | 60° | 120° | 300° |
| | 0° | 180° | 240° | 60° | 300° | 120° |

Gemäß einer zweiten Art der Ansteuerung ist vorgesehen, dass die Ansteuereinheit 39 ausgebildet ist, die Schalter 40 der vierten Schaltbrücke 36 mit im Wesentlichen 60° Phasenverschiebung gegenüber den Schaltern 40 der ersten Schaltbrücke 33 anzusteuern, die Schalter 40 der zweiten Schaltbrücke 34 mit im Wesentlichen 180° Phasenverschiebung gegenüber den Schaltern 40 der fünften Schaltbrücke 37 anzusteuern, die Schalter 40 der dritten Schaltbrücke 35 mit im Wesentlichen 60° Phasenverschiebung gegenüber den Schaltern 40 der sechsten Schaltbrücke 38 anzusteuern, die Schalter 40 der zweiten Schaltbrücke 34 oder der fünften Schaltbrücke 37 um 120° gegenüber den Schaltern 40 der ersten Schaltbrücke 33 anzusteuern, und die Schalter 40 der dritten Schaltbrücke 35 oder der sechsten Schaltbrücke 38 um 180° gegenüber den Schaltern 40 der ersten Schaltbrücke (33) anzusteuern.

Die beschriebenen zweiten Arten der Ansteuerung sind in Tabelle 2 zusammengefasst.

**Tabelle 2**

| Schaltbrücke | (33) | (36) | (34) | (37) | (35) | (38) |
|---|---|---|---|---|---|---|
| Spulenkern | (1) | (4) | (2) | (5) | (3) | (6) |
| | 0° | 60° | 120° | 300° | 240° | 180° |
| | 0° | 60° | 120° | 300° | 180° | 240° |
| | 0° | 60° | 300° | 120° | 240° | 180° |
| | 0° | 60° | 300° | 120° | 180° | 240° |

Gemäß einer dritten Art der Ansteuerung ist vorgesehen, dass die Ansteuereinheit 39 ausgebildet ist, die Schalter 40 der vierten Schaltbrücke 36 mit im Wesentlichen 120° Phasenverschiebung gegenüber den Schaltern 40 der ersten Schaltbrücke 33 anzusteuern, die Schalter 40 der zweiten Schaltbrücke 34 mit im Wesentlichen 180° Phasenverschiebung gegenüber den Schaltern 40 der fünften Schaltbrücke 37 anzusteuern, die Schalter 40 der dritten Schaltbrücke 35 mit im Wesentlichen 120° Phasenverschiebung gegenüber den Schaltern 40 der sechsten Schaltbrücke 38 anzusteuern, die Schalter 40 der zweiten Schaltbrücke 34 oder der fünften Schaltbrücke 37 um 60° gegenüber den Schaltern 40 der ersten Schaltbrücke 33 anzusteuern, und die Schalter 40 der dritten Schaltbrücke 35 oder der sechsten Schaltbrücke 38 um 180° gegenüber den Schaltern 40 der ersten Schaltbrücke 33 anzusteuern.

Die beschriebenen zweiten Arten der Ansteuerung sind in Tabelle 3 zusammengefasst.

**Tabelle 3**

| Schaltbrücke | (33) | (36) | (34) | (37) | (35) | (38) |
|---|---|---|---|---|---|---|
| Spulenkern | (1) | (4) | (2) | (5) | (3) | (6) |
| | 0° | 120° | 60° | 240° | 180° | 300° |
| | 0° | 120° | 60° | 240° | 300° | 180° |
| | 0° | 120° | 240° | 60° | 180° | 300° |
| | 0° | 120° | 240° | 60° | 300° | 180° |

Gemäß einem Verfahren zum Ansteuern einer gegenständlichen Spulenanordnung 13 mittels getakteter Halbbrücken 33, 34, 35, 36, 37, 38, wobei jeweils eine Halbbrücke 33, 34, 35, 36, 37, 38 mit einer der Spulenwicklungen 7, 8, 9, 10, 11, 12, und die Spulenwicklungen entsprechend den ihnen zugeordneten Spulenkernen 1, 2, 3, 4, 5, 6 entsprechend Fig. 1 angeordnet sind, ist vorgesehen, dass die vierte Spulenwicklung 10 mit im Wesentlichen 180° Phasenverschiebung gegenüber der ersten Spulenwicklung 7 angesteuert wird, die zweite Spulenwicklung 8 mit im Wesentlichen 180° Phasenverschiebung gegenüber der fünften Spulenwicklung 11 angesteuert wird, die dritte Spulenwicklung 9 mit im Wesentlichen 180° Phasenverschiebung gegenüber der sechsten Spulenwicklung 12 angesteuert wird, die zweite Spulenwicklung 8 oder die fünfte Spulenwicklung 11 um 60° gegenüber der ersten Spulenwicklung 7 angesteuert wird, und die dritte Spulenwicklung 9 oder die sechste Spulenwicklung 12 um 120° gegenüber der ersten Spulenwicklung 7 angesteuert wird, oder dass die vierte Spulenwicklung 10 mit im Wesentlichen 60° Phasenverschiebung gegenüber der ersten Spulenwicklung 7 angesteuert wird, die zweite Spulenwicklung 8 mit im Wesentlichen 180° Phasenverschiebung gegenüber der fünften Spulenwicklung 11 angesteuert wird, die dritte Spulenwicklung 9 mit im Wesentlichen 60° Phasenverschiebung gegenüber der sechsten Spulenwicklung 12 angesteuert wird, die zweite Spulenwicklung 8 oder die fünfte Spulenwicklung 11 um 120° gegenüber der ersten Spulenwicklung 7 angesteuert wird, und die dritte Spulenwicklung 9 oder die sechste Spulenwicklung 12 um 180° gegenüber der ersten Spulenwicklung 7 angesteuert wird, oder dass die vierte Spulenwicklung 10 mit im Wesentlichen 120° Phasenverschiebung gegenüber der ersten Spulenwicklung 7 angesteuert wird, die zweite Spulenwicklung 8 mit im Wesentlichen 180° Phasenverschiebung gegenüber der fünften Spulenwicklung 11 angesteuert wird, die dritte Spulenwicklung 9 mit im Wesentlichen 120° Phasenverschiebung gegenüber der sechsten Spulenwicklung 12 angesteuert wird, die zweite Spulenwicklung 8 oder die fünfte Spulenwicklung 11 um 60° gegenüber der ersten Spulenwicklung 7 angesteuert wird, und die dritte Spulenwicklung 9 oder die sechste Spulenwicklung 12 um 180° gegenüber der ersten Spulenwicklung 7 angesteuert wird.

Durch die gegenständlichen Maßnahmen zur Ansteuerung der einzelnen Spulenwicklungen 7, 8, 9, 10, 11, 12 in bestimmten Phasenwinkeln zueinander kann, wie bereits dargelegt, ein sehr kleines Störsignal erzielt werden. In Weiterbildung der Erfindung kann vorgesehen sein, dass die Ansteuereinheit 39 wenigstens einen Justageeingang 47 aufweist, und dass die Ansteuereinheit 39 zu einer Justage der Phasenwinkel ausgebildet ist, mit welchen die unterschiedlichen Halbbrücken 33, 34, 35, 36, 37, 38 angesteuert werden. Dadurch besteht die Möglichkeit die tatsächlichen Phasenwinkel mit denen die einzelnen Schaltbrücken 33, 34, 35, 36, 37, 38 bzw. Spulenwicklungen 7, 8, 9, 10, 11, 12 betrieben werden geringfügig zu variieren um derart ein für den jeweils realen Aufbau optimalen "Arbeitspunkt" zu finden.

## Patentansprüche

1. Spulenanordnung (13) mit einem ersten Spulenkern (1) um welchen eine erste Spulenwicklung (7) angeordnet ist, mit einem zweiten Spulenkern (2) um welchen eine zweite Spulenwicklung (8) angeordnet ist, mit einem vierten Spulenkern (4) um welchen eine vierte Spulenwicklung (10) angeordnet ist, und mit einem fünften Spulenkern (5) um welchen eine fünfte Spulenwicklung (11) angeordnet ist, wobei die Spulenkerne (1, 2, 4, 5) die Spulenwicklungen (7, 8, 10, 11) jeweils mit einem ersten Spulenkernendbereich (14) und einem, vom ersten Spulenkernendbereich (14) unterschiedlichen, zweiten Spulenkernendbereich (16) überragen, wobei die Spulenanordnung (13) weiters ein erstes Jochteil (18) und ein zweites Jochteil (21) aufweist, **dadurch gekennzeichnet, dass** erste Spulenkernendbereichseitenflächen (15) der ersten Spulenkernendbereiche (14) des ersten Spulenkerns (1) und des zweiten Spulenkerns (2) jeweils gegenüber einer ersten Jochseitenfläche (19) des ersten Jochteils (18) angeordnet sind, dass zweite Spulenkernendbereichseitenflächen (17) der zweiten Spulenkernendbereiche (16) des ersten Spulenkerns (1) und des zweiten Spulenkerns (2) jeweils gegenüber einer ersten Jochseitenfläche (22) des zweiten Jochteils (21) angeordnet sind, dass erste Spulenkernendbereichseitenflächen (15) der ersten Spulenkernendbereiche (14) des vierten Spulenkerns (4) und des fünften Spulenkerns (5) jeweils gegenüber einer, von der ersten Jochseitenfläche (19) unterschiedlichen, zweiten Jochseitenfläche (20) des ersten Jochteils (18) angeordnet sind, und dass zweite Spulenkernendbereichseitenflächen (17) der zweiten Spulenkernendbereiche (16) des vierten Spulenkerns (4) und des fünften Spulenkerns (5) jeweils gegenüber einer, von der ersten Jochseitenfläche (22) unterschiedlichen, zweiten Jochseitenfläche (23) des zweiten Jochteils (21) angeordnet sind.

2. Spulenanordnung (13) nach Anspruch 1, **dadurch gekennzeichnet, dass** die Spulenanordnung (13) weiters einen dritten Spulenkern (3) sowie einen sechsten Spulenkern (6) aufweist, wobei um den dritten Spulenkern (3) eine dritte Spulenwicklung (9) angeordnet ist, wobei um den sechsten Spulenkern (6) eine sechste Spulenwicklung (12) angeordnet ist, wobei der dritte und der sechste Spulenkern (3, 6) die dritte bzw. sechste Spulenwicklung (9, 12) jeweils mit einem ersten Spulenkernendbereich (14) und einem, vom ersten Spulenkernendbereich (14) unterschiedlichen, zweiten Spulenkernendbereich (16) überragen, dass eine erste Spulenkernendbereichseitenfläche (15) des ersten Spulenkernendbereichs (14) des dritten Spulenkerns (3) gegenüber der ersten Jochseitenfläche (19) des ersten Jochteils (18) angeordnet ist, dass eine zweite Spulenkernendbereichseitenfläche (17) des zweiten Spulenkernendbereichs (16) des dritten Spulenkerns (3) gegenüber der ersten Jochseitenfläche (22) des zweiten Jochteils (21) angeordnet ist, dass eine erste Spulenkernendbereichseitenfläche (15) des ersten Spulenkernendbereichs (14) des sechsten Spulenkerns (6) gegenüber der zweiten Jochseitenfläche (20) des ersten Jochteils (18) angeordnet ist, und dass eine zweite Spulenkernendbereichseitenfläche (17) des zweiten Spulenkernendbereichs (16) des sechsten Spulenkerns (6) gegenüber der zweiten Jochseitenfläche (23) des zweiten Jochteils (21) angeordnet ist.

3. Spulenanordnung (13) nach Anspruch 2, **dadurch gekennzeichnet, dass** der erste, zweite und dritte Spulenkern (1, 2, 3) in einer ersten Reihe angeordnet sind, wobei der zweite Spulenkern (2) zwischen dem ersten Spulenkern (1) und dem dritten Spulenkern (3) angeordnet ist, und dass der vierte, fünfte und sechste Spulenkern (4, 5, 6) in einer zweiten Reihe angeordnet sind, wobei der vierte Spulenkern (4) gegenüber dem ersten Spulenkern (1) angeordnet ist, und wobei der fünfte Spulenkern (5) zwischen dem vierten Spulenkern (4) und dem sechsten Spulenkern (6) angeordnet ist.

4. Spulenanordnung (13) nach Anspruch 2 oder 3, **dadurch gekennzeichnet, dass** ein Abstand zwischen dem ersten Spulenkern (1) und dem zweiten Spulenkern (2) im Wesentlichen identisch ist zu einem Abstand zwischen dem zweiten Spulenkern (2) und dem dritten Spulenkern (3), sowie im Wesentlichen identisch zu einem Abstand zwischen dem vierten Spulenkern (4) und dem fünften Spulenkern (5), sowie im Wesentlichen identisch zu einem Abstand zwischen dem fünften Spulenkern (5) und dem sechsten Spulenkern (6).

5. Spulenanordnung (13) nach einem der Ansprüche 2 bis 4, **dadurch gekennzeichnet, dass** die Spulenkerne (1, 2, 3, 4, 5, 6) derart um die Jochteile (18, 21) angeordnet sind, dass eine magnetische Länge zwischen dem ersten Spulenkern (1) und dem vierten Spulenkern (4) im Wesentlich identisch ist zu einer magnetischen Länge zwischen dem zweiten Spulenkern (2) und dem fünften Spulenkern (5), sowie identisch zu einer magnetischen Länge zwischen dem dritten Spulenkern (3) und dem sechsten Spulenkern (6).

6. Spulenanordnung (13) nach einem der Ansprüche 1 bis 5, **dadurch gekennzeichnet, dass** die Spulenkerne (1, 2, 4, 5) derart um die Jochteile (18, 21) angeordnet sind, dass eine magnetische Länge zwischen dem ersten Spulenkern (1) und dem zweiten Spulenkern (2) im Wesentlich identisch ist zu einer magnetischen Länge zwischen dem ersten Spulenkern (1) und dem fünften Spulenkern (5).

7. Spulenanordnung (13) nach einem der Ansprüche 1 bis 6, **dadurch gekennzeichnet, dass** wenigstens einer der Spulenkerne (1, 2, 3, 4, 5, 6) in Richtung seiner Längserstreckung (25) und/oder in Richtung quer zu dessen Längserstreckung (25) verschiebbar angeordnet ist.

8. Elektrische Vorrichtung (30) mit einem Gleichstromanschluss (31), mit einer Schaltanordnung (32) umfassend eine erste schaltbare Halbbrücke (33), eine zweite schaltbare Halbbrücke (34), eine dritte schaltbare Halbbrücke (35), eine vierte schaltbare Halbbrücke (36), eine fünfte schaltbare Halbbrücke (37) und eine sechste schaltbare Halbbrücke (38), welche jeweils mit dem Gleichstromanschluss (31) verbunden sind, wobei eine Ansteuereinheit (39) mit Schaltern (40) der einzelnen Halbbrücken (33, 34, 35, 36, 37, 38) verbunden ist, und die Ansteuereinheit (39) ausgebildet ist, die Schalter (40) der Halbbrücken (33, 34, 35, 36, 37, 38) mit einem vorgebbaren Phasenwinkel zueinander zu schalten, **dadurch gekennzeichnet, dass** Ausgänge (41, 42, 43, 44, 45, 46) der Halbbrücken (33, 34, 35, 36, 37, 38) jeweils mit einer der Spulenwicklungen (7, 8, 9, 10, 11, 12) einer Spulenanordnung (13) nach einem der Ansprüche 2 bis 7 verbunden ist.

9. Elektrische Vorrichtung (30) nach Anspruch 8, **dadurch gekennzeichnet, dass** die Spuleanordnung (13) nach Anspruch 3 ausgebildet ist, dass die erste Halbbrücke (33) mit der ersten Spulenwicklung (7) verbunden ist, dass die zweite Halbbrücke (34) mit der zweiten Spulenwicklung (8) verbunden ist, dass die dritte Halbbrücke (35) mit der dritten Spulenwicklung (9) verbunden ist, dass die vierte Halbbrücke (36) mit der vierten Spulenwicklung (10) verbunden ist, dass die fünfte Halbbrücke (37) mit der fünften Spulenwicklung (11) verbunden ist, und dass die sechste Halbbrücke (38) mit der sechsten Spulenwicklung (12) verbunden ist.

10. Elektrische Vorrichtung (30) nach Anspruch 9, **dadurch gekennzeichnet, dass** die Ansteuereinheit (39) ausgebildet ist, die Schalter (40) der vierten Schaltbrücke (36) mit im Wesentlichen 180° Phasenverschiebung gegenüber den Schaltern (40) der ersten Schaltbrücke (33) anzusteuern, die Schalter (40) der zweiten Schaltbrücke (34) mit im Wesentlichen 180° Phasenverschiebung gegenüber den Schaltern (40) der fünften Schaltbrücke (37) anzusteuern, die Schalter (40) der dritten Schaltbrücke (35) mit im Wesentlichen 180° Phasenverschiebung gegenüber den Schaltern (40) der sechsten Schaltbrücke (38) anzusteuern, die Schalter (40) der zweiten Schaltbrücke (34) oder der fünften Schaltbrücke (37) um 60° gegenüber den Schaltern (40) der ersten Schaltbrücke (33) anzusteuern, und die Schalter (40) der dritten Schaltbrücke (35) oder der sechsten Schaltbrücke (38) um 120° gegenüber den Schaltern der ersten Schaltbrücke (33) anzusteuern.

11. Elektrische Vorrichtung (30) nach Anspruch 9, **dadurch gekennzeichnet, dass** die Ansteuereinheit (39) ausgebildet ist, die Schalter (40) der vierten Schaltbrücke (36) mit im Wesentlichen 60° Phasenverschiebung gegenüber den Schaltern (40) der ersten Schaltbrücke (33) anzusteuern, die Schalter (40) der zweiten Schaltbrücke (34) mit im Wesentlichen 180° Phasenverschiebung gegenüber den Schaltern (40) der fünften Schaltbrücke (37) anzusteuern, die Schalter (40) der dritten Schaltbrücke (35) mit im Wesentlichen 60° Phasenverschiebung gegenüber den Schaltern (40) der sechsten Schaltbrücke (38) anzusteuern, die Schalter (40) der zweiten Schaltbrücke (34) oder der fünften Schaltbrücke (37) um 120° gegenüber den Schaltern (40) der ersten Schaltbrücke (33) anzusteuern, und die Schalter (40) der dritten Schaltbrücke (35) oder der sechsten Schaltbrücke (38) um 180° gegenüber den Schaltern (40) der ersten Schaltbrücke (33) anzusteuern.

12. Elektrische Vorrichtung (30) nach Anspruch 9, **dadurch gekennzeichnet, dass** die Ansteuereinheit (39) ausgebildet ist, die Schalter (40) der vierten Schaltbrücke (36) mit im Wesentlichen 120° Phasenverschiebung gegenüber den Schaltern (40) der ersten Schaltbrücke (33) anzusteuern, die Schalter (40) der zweiten Schaltbrücke (34) mit im Wesentlichen 180° Phasenverschiebung gegenüber den Schaltern (40) der fünften Schaltbrücke (37) anzusteuern, die Schalter (40) der dritten Schaltbrücke (35) mit im Wesentlichen 120° Phasenverschiebung gegenüber den Schaltern (40) der sechsten Schaltbrücke (38) anzusteuern, die Schalter (40) der zweiten Schaltbrücke (34) oder der fünften Schaltbrücke (37) um 60° gegenüber den Schaltern (40) der ersten Schaltbrücke (33) anzusteuern, und die Schalter (40) der dritten Schaltbrücke (35) oder der sechsten Schaltbrücke (38) um 180° gegenüber den Schaltern (40) der ersten Schaltbrücke (33) anzusteuern.

13. Elektrische Vorrichtung (30) nach einem der Ansprüche 8 bis 12, **dadurch gekennzeichnet, dass** die Ansteuereinheit (39) wenigstens einen Justageeingang (47) aufweist, und dass die Ansteuereinheit (39) zu einer Veränderung der Phasenwinkel ausgebildet ist, mit welchen die unterschiedlichen Halbbrücken (33, 34, 35, 36, 37, 38) angesteuert werden.

14. Elektrische Vorrichtung (30) nach einem der Ansprüche 8 bis 13, **dadurch gekennzeichnet, dass** die Ausgänge (41, 42, 43, 44, 45, 46) der Halbbrücken (33, 34, 35, 36, 37, 38) jeweils mit einem ersten Anschluss (48) der Spulenwicklungen (7, 8, 9, 10, 11, 12) verbunden sind, und dass zweite Anschlüsse (49) sämtlicher Spulenwicklungen (7, 8, 9, 10, 11, 12) miteinander verbunden sind, und mit einem Wechselstromanschluss (50) der elektrischen Vorrichtung (30) verbunden sind.

15. Verfahren zum Ansteuern einer Spulenanordnung nach Anspruch 3 mittels getakteter Halbbrücke, wobei jeweils eine Halbbrücke mit einer der Spulenwicklungen verbunden ist, **dadurch gekennzeichnet, dass** die vierte Spulenwicklung (10) mit im Wesentlichen 180° Phasenverschiebung gegenüber der ersten Spulenwicklung (7) angesteuert wird, die zweite Spulenwicklung (8) mit im Wesentlichen 180° Phasenverschiebung gegenüber der fünften Spulenwicklung (11) angesteuert wird, die dritte Spulenwicklung (9) mit im Wesentlichen 180° Phasenverschiebung gegenüber der sechsten Spulenwicklung (12) angesteuert wird, die zweite Spulenwicklung (8) oder die fünfte Spulenwicklung (11) um 60° gegenüber der ersten Spulenwicklung (7) angesteuert wird, und die dritte Spulenwicklung (9) oder die sechste Spulenwicklung (12) um 120° gegenüber der ersten Spulenwicklung (7) angesteuert wird, oder
dass die vierte Spulenwicklung (10) mit im Wesentlichen 60° Phasenverschiebung gegenüber der ersten Spulenwicklung (7) angesteuert wird, die zweite Spulenwicklung (8) mit im Wesentlichen 180° Phasenverschiebung gegenüber der fünften Spulenwicklung (11) angesteuert wird, die dritte Spulenwicklung (9) mit im Wesentlichen 60° Phasenverschiebung gegenüber der sechsten Spulenwicklung (12) angesteuert wird, die zweite Spulenwicklung (8) oder die fünfte Spulenwicklung (11) um 120° gegenüber der ersten Spulenwicklung (7) angesteuert wird, und die dritte Spulenwicklung (9) oder die sechste Spulenwicklung (12) um 180° gegenüber der ersten Spulenwicklung (7) angesteuert wird, oder
dass die vierte Spulenwicklung (10) mit im Wesentlichen 120° Phasenverschiebung gegenüber der ersten Spulenwicklung (7) angesteuert wird, die zweite Spulenwicklung (8) mit im Wesentlichen 180° Phasenverschiebung gegenüber der fünften Spulenwicklung (11) angesteuert wird, die dritte Spulenwicklung (9) mit im Wesentlichen 120° Phasenverschiebung gegenüber der sechsten Spulenwicklung (12) angesteuert wird, die zweite Spulenwicklung (8) oder die fünfte Spulenwicklung (11) um 60° gegenüber der ersten Spulenwicklung (7) angesteuert wird, und die dritte Spulenwicklung (9) oder die sechste Spulenwicklung (12) um 180° gegenüber der ersten Spulenwicklung (7) angesteuert wird.

## Claims

1. A coil arrangement (13), comprising a first coil core (1), around which a first coil winding (7) is arranged, a second coil core (2), around which a second coil winding (8) is arranged, a fourth coil core (4), around which a fourth coil core (10) is arranged, and a fifth coil core (5), around which a fifth coil core (11) is arranged, wherein the coil cores (1, 2, 4, 5) protrude over the coil windings (7, 8, 10, 11) with a respective first coil core end region (14) and a second coil core end region (16) which is different from the first coil core end region (14), wherein the coil arrangement (13) further comprises a first yoke part (18) and a second yoke part (21), **characterized in that** first coil core end region side surfaces (15) of the first coil core end regions (14) of the first coil core (1) and of the second coil core (2) are respectively arranged opposite a first yoke side surface (19) of the first yoke part (18), that second coil core end region side surfaces (17) of the second coil core end regions (16) of the first coil core (1) and of the second coil core (2) are respectively arranged opposite a first yoke side surface (22) of the second yoke part (21), that first coil core end region side surfaces (15) of the first coil core end regions (14) of the fourth coil core (4) and the of fifth coil core (5) are respectively arranged opposite a second yoke side suface (20) of the first yoke part (18) which is different from the first yoke side surface (19), and that second coil core end region side faces (17) of the second coil core end regions (16) of the fourth coil core (4) and of the fifth coil core (5) are respectively arranged opposite a second yoke side surface (23) of the second yoke part (21) which is different from the first yoke side surface (22).

2. A coil arrangement (13) according to claim 1, **characterized in that** the coil arrangement (13) further comprises a third coil core (3) and a sixth coil core (6), wherein a third coil winding (9) is arranged around the third coil core (3), wherein a sixth coil winding (12) is arranged about the sixth coil core (6), wherein the third and sixth winding coil (3, 6) protrude over the third and sixth coil winding (9, 12) with a respective first coil core end region (14) and a second coil core end region (16) which is different from the first coil core end region (14), that a first coil core end region side surface (15) of the first coil core end region (14) of the third coil core (3) is arranged opposite the first yoke side surface (19) of the first yoke part (18), that a second coil core end region side surface (17) of the second coil core end region (16) of the third coil core (3) is arranged opposite the first yoke side surface (22) of the second yoke part (21), that a first coil core end region side surface (15) of the first coil core end region (14) of the sixth coil core (6) is arranged opposite the second yoke side surface (20) of the first yoke part (18), and that a second coil core end region side surface (17) of the second coil core end region (16) of the sixth coil core (6) is arranged opposite the second yoke side surface (23) of the second yoke part (21).

3. A coil arrangement (13) according to claim 2, **characterized in that** the first, second and third coil cores (1, 2, 3) are arranged in a first row, wherein the second coil core (2) is arranged between the first coil core (1) and the third coil core (3), and that the fourth, fifth and sixth coil cores (4, 5, 6) are arranged in a second row, wherein the fourth coil core (4) is arranged opposite the first coil core (1), and wherein the fifth coil core (5) is arranged between the fourth coil core (4) and the sixth coil core (6).

4. A coil arrangement (13) according to claim 2 or 3, **characterized in that** a distance between the first coil core (1) and the second coil core (2) is substantially identical to a distance between the second coil core (2) and the third coil core (3), and substantially identical to a distance between the fourth coil core (4) and the fifth coil core (5), and substantially identical to a distance between the fifth coil core (5) and the sixth coil core (6).

5. A coil arrangement (13) according to one of the claims 2 to 4, **characterized in that** the coil cores (1, 2, 3, 4, 5, 6) are arranged around the yoke parts (18, 21) in such a way that a magnetic length between the first coil core (1) and the fourth coil core (4) is substantially identical to a magnetic length between the second coil core (2) and the fifth coil core (5), as well as identical to a magnetic length between the third coil core (3) and the sixth coil core (6).

6. A coil arrangement (13) according to one of the claims 1 to 5, **characterized in that** the coil cores (1, 2, 4, 5) are arranged around the yoke parts (18, 21) in such a way that a magnetic length between the first coil core (1) and the second coil core (2) is essentially identical to a magnetic length between the first coil core (1) and the fifth coil core (5).

7. A coil arrangement (13) according to one of the claims 1 to 6, **characterized in that** at least one of the coil cores (1, 2, 3, 4, 5, 6) is displaceably arranged in the direction of its longitudinal extension (25) and/or in the direction transversely to its longitudinal extension (25).

8. An electrical device (30), comprising a direct current connection (31), a switching arrangement (32) having a first switchable half-bridge (33), a second switchable half-bridge (34), a third switchable half-bridge (35), a fourth switchable half-bridge (36), a fifth switchable half-bridge (37) and a sixth switchable half-bridge (38), which are each connected to the direct current connection (31), wherein a control unit (39) is connected to switches (40) of the individual half-bridges (33, 34, 35, 36, 37, 38), and the control unit (39) is designed to switch the switches (40) of the half-bridges (33, 34, 35, 36, 37, 38) with a predeterminable phase angle (7, 8, 9, 10, 11, 12) relative to each other, **characterized in that** the outputs (41, 42, 43, 44, 45, 46) of the half-bridges (33, 34, 35, 36, 37, 38) are each connected to one of the coil windings (7, 8, 9, 10, 11, 12) of a coil arrangement (13) according to one of the claims 2 to 7.

9. An electrical device according to claim 8, **characterized in that** the coil arrangement (13) is formed according to claim 3, that the first half-bridge (33) is connected to the first coil winding (7), that the second half-bridge (34) is connected to the second coil winding (8), that the third half-bridge (35) is connected to the third coil winding (9), that the fourth half-bridge (36) is connected to the fourth coil winding (10), that the fifth half-bridge (37) is connected to the fourth coil winding (11), and that the sixth half-bridge (38) is connected to the sixth coil winding (12).

10. An electrical device according to claim 9, **characterized in that** the control unit (39) is configured to control the switches (40) of the fourth switching bridge (36) with a substantially 180° phase shift relative to the switches (40) of the first switching bridge (33), to control the switches (40) of the second switching bridge (34) with a substantially 180° phase shift relative to the switches (40) of the fifth switching bridge (37), to control the switches (40) of the third switching bridge (35) with a substantially 180° phase shift relative to the switches (40) of the sixth switching bridge (38), to control the switches (40) of the second switching bridge (34) or the fifth switching bridge (37) by 60° relative to the switches (40) of the first switching bridge (33), and to control the switches (40) of the third switching bridge (35) or the sixth switching bridge (38) by 120° relative to the switches of the first switching bridge (33).

11. An electrical device (30) according to claim 9, **characterized in that** the control unit (39) is formed to control the switches (40) of the fourth switching bridge (36) with a substantially 60° phase shift relative to the switches (40) of the first switching bridge (33), to control the switches (40) of the second switching bridge (34) with a substantially 180° phase shift relative to the switches (40) of the fifth switching bridge (7), to control the switches (40) of the third switching bridge (35) with a substantially 60° phase shift relative to the switches (40) of the sixth switching bridge (38), to control the switches (40) of the second switching bridge (34) or the fifth switching bridge (37) by 120° relative to the switches (40) of the first switching bridge (33), and to control the switches (40) of the third switching bridge (35) or the sixth switching bridge (38) by 180° relative to the switches (40) of the first switching bridge (33).

12. An electrical device (30) according to claim 9, **characterized in that** the control unit (39) is formed to control the switches (40) of the fourth switching bridge (36) with a substantially 120° phase shift relative to the switches (40) of the first switching bridge (33), to control the switches (40) of the second switching bridge (34) with a substantially 180° phase shift relative to the switches (40) of the fifth switching bridge (37), to control the switches (40) of the third switching bridge (35) with a substantially 120° phase shift relative to the switches (40) of the sixth switching bridge (38), to control the switches (40) of the second switching bridge (34) or the fifth switching bridge (37) by 60° relative to the switches (40) of the first switching bridge (33), and to control the switches (40) of the third switching bridge (35) or the sixth switching bridge (38) by 180° relative to the switches (40) of the first switching bridge (33).

13. An electrical device according to one of the claims 8 to 12, **characterized in that** the control unit (39) has at least one adjustment input, and that the control unit (39) is designed to change the phase angles with which the different half-bridges (33, 34, 35, 36, 37, 38) are controlled.

14. An electrical device according to one of the claims 8 to 13, **characterized in that** the outputs (41, 42, 43, 44, 45, 46) of the half-bridges (33, 34, 35, 36, 37, 38) are each connected to a first connection (48) of the coil windings (7, 8, 9, 10, 11, 12), and that the second connections (49) of all coil windings (7, 8, 9, 10, 11, 12) are connected to one another, and are connected to an alternating current connection (50) of the electrical device (30).

15. A method for controlling a coil arrangement according to claim 3 by means of a clocked half-bridge, wherein in each case one half-bridge is connected to one of the coil windings, **characterized in that** the fourth coil winding (10) is controlled with a substantially 180° phase shift relative to the first coil winding (7), the second coil winding (8) is controlled with a substantially 180° phase shift relative the fifth coil winding (11), the third coil winding (9) is controlled with a substantially 180° phase shift relative to the sixth coil winding (12), the second coil winding (8) or the fifth coil winding (11) is controlled by 60° relative to the first coil winding (7), and the third coil winding (9) or the sixth coil winding (12) is controlled by 120° relative to the first coil winding, or
that the fourth coil winding (10) is controlled with a substantially 60° phase shift relative to the first coil winding (7), the second coil winding (8) is controlled with a substantially 180° phase shifting relative to the fifth coil winding (11), the third coil winding (9) is controlled with a substantially 60° phase shift relative to the sixth coil winding (12), the second coil winding (8) or the fifth coil winding (11) is controlled by 120° relative to to the first coil winding (7), and the third coil winding (9) or the sixth coil winding (12) is controlled by 180° relative to the first coil winding (7), or the fourth coil winding (10) is controlled with a substantially 120° phase shift relative to the first coil winding (7), the second coil winding (8) is controlled with a substantially 180° phase shift relative to the fifth coil winding (11), the third coil winding (9) is controlled with a substantially 120° phase shift relative to the sixth coil winding (12), the second coil winding (8) or the fifth coil winding (11) is controlled by 60° relative to the first coil winding (7), and the third coil winding (9) or the sixth coil winding (12) is controlled by 180° relative to the first coil winding (7).

## Revendications

1. Disposition de bobine (13) avec un premier noyau de bobine (1) autour duquel est disposé un premier enroulement de bobine (7), avec un deuxième noyau de bobine (2) autour duquel est disposé un deuxième enroulement de bobine (8), avec un quatrième noyau de bobine (4) autour duquel est disposé un quatrième enroulement de bobine (10) et avec un cinquième noyau de bobine (5) autour duquel est disposé un cinquième enroulement de bobine (11), les noyaux de bobine (1, 2, 4, 5) dépassant des enroulements de bobine (7, 8, 10, 11) chacun par une première partie d'extrémité de noyau de bobine (14) et une deuxième partie d'extrémité de noyau de bobine (16) différente de la première partie d'extrémité de noyau de bobine (14), la disposition de bobine (13) présentant en outre une première partie de culasse (18) et une deuxième partie de culasse (21), **caractérisée en ce que** des premières surfaces latérales de partie d'extrémité de noyau de bobine (15) des premières parties d'extrémité de noyau de bobine (14) du premier noyau de bobine (1) et du deuxième noyau de bobine (2) sont disposées chacune face à une première surface latérale de culasse (19) de la première partie de culasse (18), **en ce que** des deuxièmes surfaces latérales de partie d'extrémité de noyau de bobine (17) des deuxièmes parties d'extrémité de noyau de bobine (16) du premier noyau de bobine (1) et du deuxième noyau de bobine (2) sont disposées chacune face à une première surface latérale de culasse (22) de la deuxième partie de culasse (21), **en ce que** des premières surfaces latérales de partie d'extrémité de noyau de bobine (15) des premières parties d'extrémité de noyau de bobine (14) du quatrième noyau de bobine (4) et du cinquième noyau de bobine (5) sont disposées chacune face à une deuxième surface latérale de culasse (20) de la première partie de culasse (18) différente de la première surface latérale de culasse (19) et **en ce que** des deuxièmes surfaces latérales de partie d'extrémité de noyau de bobine (17) des deuxièmes parties d'extrémité de noyau de bobine (16) du quatrième noyau de bobine (4) et du cinquième noyau de bobine (5) sont disposées chacune face à une deuxième surface latérale de culasse (23) de la deuxième partie de culasse (21) différente de la première surface latérale de culasse (22).

2. Disposition de bobine (13) selon la revendication 1, **caractérisée en ce que** la disposition de bobine (13) présente en outre un troisième noyau de bobine (3) et un sixième noyau de bobine (6), avec un troisième enroulement de bobine (9) disposé autour du troisième noyau de bobine (3), avec un sixième enroulement de bobine (12) disposé autour du sixième noyau de bobine (6), les troisième et sixième noyaux de bobine (3, 6) dépassant respectivement des troisième et sixième enroulements de bobine (9, 12) par une première partie d'extrémité de noyau de bobine (14) et une deuxième partie d'extrémité de noyau de bobine (16) différente de la première partie d'extrémité de noyau de bobine (14), **en ce qu'**une première surface latérale de partie d'extrémité du noyau de bobine (15) de la première partie d'extrémité de noyau de bobine (14) du troisième noyau de bobine (3) est disposée face à la première surface latérale de culasse (19) de la première partie de culasse (18), **en ce qu'**une deuxième surface latérale de partie d'extrémité du noyau de bobine (17) de la deuxième partie d'extrémité de noyau de bobine (16) du troisième noyau de bobine (3) est disposée face à la première surface latérale de culasse (22) de la deuxième partie de culasse (21), **en ce qu'**une première surface latérale de partie d'extrémité du noyau de bobine (15) de la première partie d'extrémité de noyau de bobine (14) du sixième noyau de bobines (6) est disposée face à la deuxième surface latérale de culasse (20) de la première partie de culasse (18) et **en ce qu'**une deuxième surface latérale de partie d'extrémité du noyau de bobine (17) de la deuxième partie d'extrémité de noyau de bobine (16) du sixième noyau de bobine (6) est disposée face à la deuxième surface latérale de culasse (23) de la deuxième partie de culasse (21).

3. Disposition de bobine (13) selon la revendication 2, **caractérisée en ce que** les premier, deuxième et troisième noyaux de bobine (1, 2, 3) sont disposés dans une première rangée, le deuxième noyau de bobine (2) étant disposé entre le premier noyau de bobine (1) et le troisième noyau de bobine (3), et **en ce que** les quatrième, cinquième et sixième noyaux de bobine (4, 5, 6) sont disposés dans une deuxième rangée, le quatrième noyau de bobine (4) étant disposé face au premier noyau de bobine (1) et le cinquième noyau de bobine (5) étant disposé entre le quatrième noyau de bobine (4) et le sixième noyau de bobine (6).

4. Disposition de bobine (13) selon la revendication 2 ou 3, **caractérisée en ce qu'**une distance entre le premier noyau de bobine (1) et le deuxième noyau de bobine (2) est sensiblement identique à une distance entre le deuxième noyau de bobine (2) et le troisième noyau de bobine (3) et sensiblement identique à une distance entre le quatrième noyau de bobine (4) et le cinquième noyau de bobine (5) et sensiblement identique à une distance entre le cinquième noyau de bobine (5) et le sixième noyau de bobine (6).

5. Disposition de bobine (13) selon l'une des revendications 2 à 4, **caractérisée en ce que** les noyaux de bobine (1, 2, 3, 4, 5, 6) sont disposés autour des parties de culasse (18, 21) de telle manière qu'une longueur magnétique entre le premier noyau de bobine (1) et le quatrième noyau de bobine (4) est sensiblement identique à une longueur magnétique entre le deuxième noyau de bobine (2) et le cinquième noyau de bobine (5) et identique à une longueur magnétique entre le troisième noyau de bobine (3) et le sixième noyau de bobine (6).

6. Disposition de bobine (13) selon l'une des revendications 1 à 5, **caractérisée en ce que** les noyaux de bobine (1, 2, 4, 5) sont disposés autour des parties de culasse (18, 21) de telle manière qu'une longueur magnétique entre le premier noyau de bobine (1) et le deuxième noyau de bobine (2) soit sensiblement identique à une longueur magnétique entre le premier noyau de bobine (1) et le cinquième noyau de bobine (5).

7. Disposition de bobine (13) selon l'une des revendications 1 à 6, **caractérisée en ce qu'**au moins un des noyaux de bobine (1, 2, 3, 4, 5, 6) est disposé de manière à pouvoir se déplacer dans le sens de sa longueur (25) et/ou transversalement par rapport à sa longueur (25).

8. Dispositif électrique (30) avec un branchement de courant continu (31), avec une disposition de commutation (32) comprenant un premier demi-pont commutable (33), un deuxième demi-pont commutable (34), un troisième demi-pont commutable (35), un quatrième demi-pont commutable (36), un cinquième demi-pont commutable (37) et un sixième demi-pont commutable (38), qui sont reliés chacun au branchement de courant continu (31), une unité d'activation (39) étant reliée à des commutateurs (40) des différents demi-ponts (33, 34, 35, 36, 37, 38) et l'unité d'activation (39) étant conçue pour commuter les commutateurs (40) des demi-ponts (33, 34, 35, 36, 37, 38) les uns avec les autres avec un angle de phase pouvant être prédéterminé, **caractérisé en ce que** des sorties (41, 42, 43, 44, 45, 46) des demi-ponts (33, 34, 35, 36, 37, 38) sont reliées chacune à un des enroulements de bobine (7, 8, 9, 10, 11, 12) d'une disposition de bobine (13) selon l'une des revendications 2 à 7.

9. Dispositif électrique (30) selon la revendication 8, **caractérisé en ce que** la disposition de bobine (13) est conformée selon la revendication 3, **en ce que** le premier demi-pont (33) est relié au premier enroulement de bobine (7), **en ce que** deuxième demi-pont (34) est relié au deuxième enroulement de bobine (8), **en ce que** troisième demi-pont (35) est relié au troisième enroulement de bobine (9), **en ce que** quatrième demi-pont (36) est relié au quatrième enroulement de bobine (10), **en ce que** cinquième demi-pont (37) est relié au cinquième enroulement de bobine (11) et **en ce que** le sixième demi-pont (38) est relié au sixième enroulement de bobine (12).

10. Dispositif électrique (30) selon la revendication 9, **caractérisé en ce que** l'unité d'activation (39) est conçue pour activer les commutateurs (40) du quatrième pont de commutation (36) avec un décalage de phase de sensiblement 180° par rapport aux commutateurs (40) du premier pont de commutation (33), les commutateurs (40) du deuxième pont de commutation (34) avec un décalage de phase de sensiblement 180° par rapport aux commutateurs (40) du cinquième pont de commutation (37), les commutateurs (40) du troisième pont de commutation (35) avec un décalage de phase de sensiblement 180° par rapport aux commutateurs (40) du sixième pont de commutation (38), pour activer les commutateurs (40) du deuxième pont de commutation (34) ou du cinquième pont de commutation (37) avec un décalage de 60° par rapport aux commutateurs (40) du premier pont de commutation (33) et pour activer les commutateurs (40) du troisième pont de commutation (35) ou du sixième pont de commutation (38) avec un décalage de 120° par rapport aux commutateurs du premier pont de commutation (33).

11. Dispositif électrique (30) selon la revendication 9, **caractérisé en ce que** l'unité d'activation (39) est conçue pour activer les commutateurs (40) du quatrième pont de commutation (36) avec un décalage de phase de sensiblement 60° par rapport aux commutateurs (40) du premier pont de commutation (33), les commutateurs (40) du deuxième pont de commutation (34) avec un décalage de phase de sensiblement 180° par rapport aux commutateurs (40) du cinquième pont de commutation (37), les commutateurs (40) du troisième pont de commutation (35) avec un décalage de phase de sensiblement 60° par rapport aux commutateurs (40) du sixième pont de commutation (38), les commutateurs (40) du deuxième pont de commutation (34) ou du cinquième pont de commutation (37) avec un décalage de 120° par rapport aux commutateurs (40) du premier pont de commutation (33) et pour activer les commutateurs (40) du troisième pont de commutation (35) ou du sixième pont de commutation (38) avec un décalage de 180° par rapport aux commutateurs (40) du premier pont de commutation (33).

12. Dispositif électrique (30) selon la revendication 9, **caractérisé en ce que** l'unité d'activation (39) est conçue pour activer les commutateurs (40) du quatrième pont de commutation (36) avec un décalage de phase de sensiblement 120° par rapport aux commutateurs (40) du premier pont de commutation (33), les commutateurs (40) du deuxième pont de commutation (34) avec un décalage de phase de sensiblement 180° par rapport aux commutateurs (40) du cinquième pont de commutation (37), les commutateurs (40) du troisième pont de commutation (35) avec un décalage de phase de sensiblement 120° par rapport aux commutateurs (40) du sixième pont de commutation (38), les commutateurs (40) du deuxième pont de commutation (34) ou du cinquième pont de commutation (37) avec un décalage de phase de 60° par rapport aux commutateurs (40) du premier pont de commutation (33) et les commutateurs (40) du troisième pont de commutation (35) ou du sixième pont de commutation (38) avec un décalage de 180° par rapport aux commutateurs (40) du premier pont de commutation (33).

13. Dispositif électrique (30) selon l'une des revendications 8 à 12, **caractérisé en ce que** l'unité d'activation (39) présente au moins une entrée d'ajustement (47) et **en ce que** l'unité d'activation (39) est conçue pour modifier l'angle de phase avec lequel les différents demi-ponts (33, 34, 35, 36, 37, 38) sont activés.

14. Dispositif électrique (30) selon l'une des revendications 8 à 13, **caractérisé en ce que** les sorties (41, 42, 43, 44, 45, 46) des demi-ponts (33, 34, 35, 36, 37, 38) sont reliées chacune à un premier branchement (48) des enroulements de bobine (7, 8, 9, 10, 11, 12) et **en ce que** des deuxièmes branchements (49) de tous les enroulements de bobine (7, 8, 9, 10, 11, 12) sont reliés entre eux et avec un branchement de courant alternatif (50) du dispositif électrique (30).

15. Procédé pour l'activation d'une disposition de bobine selon la revendication 3 au moyen de demi-ponts cadencés, dans lequel chaque demi-pont est relié à l'un des enroulements de bobine, **caractérisé en ce que** le quatrième enroulement de bobine (10) est activé avec un décalage de phase de sensiblement 180° par rapport au premier enroulement de bobine (7), le deuxième enroulement de bobine (8) est activé avec un décalage de phase de sensiblement 180° par rapport au cinquième enroulement de bobine (11), le troisième enroulement de bobine (9) est activé avec un décalage de phase de sensiblement 180° par rapport au sixième enroulement de bobine (12), le deuxième enroulement de bobine (8) ou le cinquième enroulement de bobine (11) est activé avec un décalage de 60° par rapport au premier enroulement de bobine (7) et le troisième enroulement de bobine (9) ou le sixième enroulement de bobine (12) est activé avec un décalage de 120° par rapport au premier enroulement de bobine (7) ou
**en ce que** le quatrième enroulement de bobine (10) est activé avec un décalage de phase de sensiblement 60° par rapport au premier enroulement de bobine (7), le deuxième enroulement de bobine (8) est activé avec un décalage de phase de sensiblement 180° par rapport au cinquième enroulement de bobine (11), le troisième enroulement de bobine (9) est activé avec un décalage de phase de sensiblement 60° par rapport au sixième enroulement de bobine (12), le deuxième enroulement de bobine (8) ou le cinquième enroulement de bobine (11) est activé avec un décalage de 120° par rapport au premier enroulement de bobine (7) et le troisième enroulement de bobine (9) ou le sixième enroulement de bobine (12) est activé avec un décalage de 180° par rapport au premier enroulement de bobine (7), ou
**en ce que** le quatrième enroulement de bobine (10) est activé avec un décalage de phase de sensiblement 120° par rapport au premier enroulement de bobine (7), le deuxième enroulement de bobine (8) est activé avec un décalage de phase de sensiblement 180° par rapport au cinquième enroulement de bobine (11), le troisième enroulement de bobine (9) est activé avec un décalage de phase de sensiblement 120° par rapport au sixième enroulement de bobine (12), le deuxième enroulement de bobine (8) ou le cinquième enroulement de bobine (11) est activé avec un décalage de 60° par rapport au premier enroulement de bobine (7) et le troisième enroulement de bobine (9) ou le sixième enroulement de bobine (12) est activé avec un décalage de 180° par rapport au premier enroulement de bobine (7).
